(19)

Europäisches
Patentamt
European
Patent Office
Office européen
des brevets

(11)  **EP 4 513 784 A1**

(12)  **EUROPEAN PATENT APPLICATION**

(43) Date of publication:
26.02.2025  Bulletin 2025/09

(21) Application number: 24192558.5

(22) Date of filing: 02.08.2024

(51) International Patent Classification (IPC):
*H04B 7/185* (2006.01)  *H04W 36/00* (2009.01)

(52) Cooperative Patent Classification (CPC):
H04B 7/185; H04B 7/1851; H04B 7/18513;
H04B 7/18519; H04B 7/18541; H04W 36/0072;
H04W 48/12; H04W 84/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  03.08.2023  US 202363530534 P

(71) Applicant: **Sharp Kabushiki Kaisha
Sakai-shi, Osaka 590-8522 (JP)**

(72) Inventors:
• **LI, Yen-Hua
236 Taipei (TW)**
• **TSENG, Yung-Lan
236 Taipei (TW)**
• **LIN, Chia-Hung
236 Taipei (TW)**

(74) Representative: **Müller-Boré & Partner
Patentanwälte PartG mbB
Friedenheimer Brücke 21
80639 München (DE)**

(54)  **METHOD AND DEVICE FOR SATELLITE SWITCHING IN NON-TERRESTRIAL NETWORK**

(57)    A method for satellite switching performed by a user equipment (UE) is provided. The method acquires, from a cell, a first configuration related to a first satellite. The first configuration includes a timestamp and time information. The method performs, based on the time information, a downlink (DL) synchronization with the first satellite, starting from a time indicated by the timestamp. The method then re-acquires, from the first satellite, a second configuration related to the first satellite and calculates a common timing advance and a UE-specific timing advance based on the re-acquired second configuration related to the first satellite.

FIG.1

EP 4 513 784 A1

**Description**

FIELD

The present disclosure generally relates to wireless communications and, more particularly, to methods and devices for satellite switching in a non-terrestrial network.

BACKGROUND

Various efforts have been made to improve different aspects of wireless communication for cellular wireless communication systems, such as the 5th Generation (5G) New Radio (NR), by improving data rate, latency, reliability, and mobility. The 5G NR system is designed to provide flexibility and configurability to optimize network services and types, accommodating various use cases, such as enhanced Mobile Broadband (eMBB), massive Machine-Type Communication (mMTC), and Ultra-Reliable and Low-Latency Communication (URLLC). As the demand for radio access continues to grow, however, there is a need for further improvements in wireless communication in the next-generation wireless communication systems.

SUMMARY

The present disclosure is directed to methods and devices for satellite switching in a non-terrestrial network.
According to a first aspect of the present disclosure, a method for satellite switching performed by a User Equipment (UE) is provided. The method includes acquiring, from a cell, a first configuration related to a first satellite, the first configuration including a timestamp and time information; performing, based on the time information, a downlink (DL) synchronization with the first satellite, starting from a time indicated by the timestamp; re-acquiring, from the first satellite, a second configuration related to the first satellite; and calculating a common timing advance and a UE-specific timing advance based on the re-acquired second configuration related to the first satellite.
In some implementations of the first aspect of the present disclosure, the first configuration related to the first satellite further includes timer information, and the method further includes: at the time indicated by the timestamp, starting a timer based on the timer information.
In some implementations of the first aspect of the present disclosure, the timer includes a radio resource control (RRC) timer.
In some implementations of the first aspect of the present disclosure, acquiring, from the cell, the first configuration related to the first satellite includes acquiring, from a second satellite, the first configuration related to the first satellite. The timer is configured to control a validity of uplink synchronization during a connection with the second satellite.
In some implementations of the first aspect of the present disclosure, acquiring, from the cell, the first configuration related to the first satellite includes: acquiring, from a second satellite, the first configuration related to the first satellite, where both the first satellite and the second satellite are associated with the cell.
In some implementations of the first aspect of the present disclosure, acquiring, from the cell, the first configuration related to the first satellite includes receiving system information broadcast by the cell. The system information includes the first configuration related to the first satellite.
In some implementations of the first aspect of the present disclosure, the system information includes at least one of a system information block type 1 (SIB 1) and a system information block type 19 (SIB19).
In some implementations of the first aspect of the present disclosure, performing the DL synchronization with the first satellite includes receiving a synchronization signal block (SSB) of the first satellite based on the time information.
In some implementations of the first aspect of the present disclosure, the time information is associated with the SSB and is in units of subframes.
In some implementations of the first aspect of the present disclosure, re-acquiring, from the first satellite, the second configuration related to the first satellite includes: re-acquiring, from the first satellite, the second configuration related to the first satellite after performing the DL synchronization with the first satellite.
According to a second aspect of the present disclosure, a user equipment (UE) is provided. The UE includes one or more non-transitory computer-readable media storing one or more computer-executable instructions and at least one processor coupled to the one or more non-transitory computer-readable media. The at least one processor is configured to execute the one or more computer-executable instructions to cause the UE to: acquire, from a cell, a first configuration related to a first satellite, the first configuration including a timestamp and time information; perform, based on the time information, a downlink (DL) synchronization with the first satellite, starting from a time indicated by the timestamp; re-acquire, from the first satellite, a second configuration related to the first satellite; and calculate a common timing advance and a UE-specific timing advance based on the re-acquired second configuration related to the first satellite.

In some implementations of the second aspect of the present disclosure, the first configuration related to the first satellite further includes timer information, and the one or more computer-executable instructions, when executed by the at least one processor, further cause the UE to: at the time indicated by the timestamp, start a timer based on the timer information.

In some implementations of the second aspect of the present disclosure, the timer includes a radio resource control (RRC) timer.

In some implementations of the second aspect of the present disclosure, acquiring, from the cell, the first configuration related to the first satellite includes acquiring, from a second satellite, the first configuration related to the first satellite. The timer is configured to control a validity of uplink synchronization during a connection with the second satellite.

In some implementations of the second aspect of the present disclosure, acquiring, from the cell, the first configuration related to the first satellite includes: acquiring, from a second satellite, the first configuration related to the first satellite, where both the first satellite and the second satellite are associated with the cell.

In some implementations of the second aspect of the present disclosure, acquiring, from the cell, the first configuration related to the first satellite includes receiving system information broadcast by the cell. The system information includes the first configuration related to the first satellite.

In some implementations of the second aspect of the present disclosure, the system information includes at least one of a system information block type 1 (SIB 1) and a system information block type 19 (SIB19).

In some implementations of the second aspect of the present disclosure, performing the DL synchronization with the first satellite includes receiving a synchronization signal block (SSB) of the first satellite based on the time information.

In some implementations of the second aspect of the present disclosure, the time information is associated with the SSB and is in units of subframes.

In some implementations of the second aspect of the present disclosure, re-acquiring, from the first satellite, the second configuration related to the first satellite includes: re-acquiring, from the first satellite, the second configuration related to the first satellite after performing the DL synchronization with the first satellite.

## BRIEF DESCRIPTION OF THE DRAWINGS

Aspects of the example disclosure are best understood from the following detailed description when read with the accompanying figures. Various features are not drawn to scale. Dimensions of various features may be arbitrarily increased or reduced for clarity of discussion.

FIG. 1 is a diagram illustrating a non-terrestrial network (NTN), according to an example implementation of the present disclosure.

FIG. 2 is a diagram illustrating an NTN for a transparent NTN payload, according to an example implementation of the present disclosure.

FIG. 3 is a diagram illustrating a soft satellite switching in a quasi-earth-fixed cell scenario, according to an example implementation of the present disclosure.

FIG. 4 is a diagram illustrating a hard satellite switching in a quasi-earth-fixed cell scenario, according to an example implementation of the present disclosure.

FIG. 5 is a signaling diagram illustrating a signaling-based network-controlled satellite switching procedure, according to an example implementation of the present disclosure.

FIG. 6 is a signaling diagram illustrating a time-based network-controlled satellite switching procedure, according to an example implementation of the present disclosure.

FIG. 7 is a signaling diagram illustrating a UE-initiated satellite switching procedure, according to an example implementation of the present disclosure.

FIG. 8 is a flowchart illustrating a method/process for satellite switching, according to an example implementation of the present disclosure.

FIG. 9 is a block diagram illustrating a node for wireless communication, according to an example implementation of the present disclosure.

## DETAILED DESCRIPTION

Some of the acronyms described in the present disclosure are defined as follows. Unless otherwise specified, the terms in the present disclosure have the following meanings.

| Abbreviation | Full name |
| --- | --- |
| 3GPP | 3rd Generation Partnership Project |

(continued)

| Abbreviation | Full name |
| --- | --- |
| ACK | Acknowledgement |
| BA | Bandwidth Adaptation |
| BFR | Beam Failure Recovery |
| BS | Base Station |
| BWP | Bandwidth Part |
| CA | Carrier Aggregation |
| CE | Control Element |
| CORESET | Control Resource Set |
| COT | Channel Occupancy Time |
| C-RNTI | Cell-Radio Network Temporary Identifier |
| CSI | Channel State Information |
| DC | Dual Connectivity |
| DCI | Downlink Control Information |
| DCP | DCI with CRC scrambled by PS-RNTI |
| DL | Downlink |
| DRX | Discontinuous Reception |
| GNSS | Global Navigation Satellite System |
| GSCN | Global Synchronization Channel Number |
| GSO | GeoSynchronous Orbit |
| GW | GateWay |
| HARQ | Hybrid Automatic Repeat request |
| HARQ-ACK | Hybrid automatic repeat request acknowledgement |
| IE | Information Elements |
| L1 | Layer-1 |
| L2 | Layer-2 |
| L3 | Layer-3 |
| LBT | Listen Before Talk |
| LRR | Link Radio |
| MAC | Medium Access Control |
| MCG | Master Cell Group |
| MIMO | Multiple Input Multiple Output |
| Msg1 | Message 1 |
| MsgA | Message A |
| MsgB | Message B |
| NACK | Non-Acknowledgement |
| NGSO | Non-GeoSynchronous Orbit |
| NTN | Non-Terrestrial Network |
| NW | Network |
| PCell | Primacy Cell |
| PCI | Physical Cell Identity |
| PDCCH | Physical Downlink Control Channel |
| PDSCH | Physical Downlink Shared Channel |
| PHY | Physical Layer |
| PL-RS | Path-Loss Reference Signal |
| PRACH | Physical Random Access Channel |
| PS | Power Saving |
| PUCCH | Physical Uplink Control Channel |
| PUSCH | Physical Uplink Shared Channel |
| RA | Random Access |
| RAR | Random Access Response |

(continued)

| Abbreviation | Full name |
|---|---|
| Rel | Release |
| RLF | Radio Link Failure |
| RNTI | Radio Network Temporary Identifier |
| RP | Reference Point |
| RRC | Radio Resource Control |
| RRM | Radio Resource Management |
| RSRP | Reference Signal Received Power |
| RTT | Round-Trip Time |
| SAT | Satellite |
| SCell | Secondary Cell |
| SCG | Secondary Cell Group |
| SCS | SubCarrier Spacing |
| SFN | System Frame Number |
| SI | System Information |
| SIB | System Information Block |
| SMTC | SSB Measurement Timing Configuration |
| SR | Scheduling Request |
| SS | Synchronization Signal |
| SSB | SS/PBCH block |
| TA | Timing Advance |
| TNL | Transport Network Layer |
| UCI | Uplink Control Information |
| UE | User Equipment |
| UL | Uplink |

The following description contains specific information pertaining to example implementations in the present disclosure. The drawings in the present disclosure and their accompanying detailed description are directed to merely example implementations. However, the present disclosure is not limited to merely these example implementations. Other variations and implementations of the present disclosure will occur to those skilled in the art. Unless noted otherwise, like or corresponding elements among the figures may be indicated by like or corresponding reference numerals. Moreover, the drawings and illustrations in the present disclosure are generally not to scale and are not intended to correspond to actual relative dimensions.

For the purposes of consistency and ease of understanding, like features may be identified (although, in some examples, not shown) by the same numerals in the example figures. However, the features in different implementations may be differed in other respects, and thus shall not be narrowly confined to what is shown in the figures.

The description uses the phrase "in some implementations," which may refer to one or more of the same or different implementations. The term "coupled" is defined as connected, whether directly or indirectly through intervening components, and is not necessarily limited to physical connections. The term "comprising," when utilized, means "including, but not necessarily limited to"; it specifically indicates open-ended inclusion or membership in the so-described combination, group, series and the equivalent. The expression "at least one of A, B and C," "at least one of the following: A, B and C," "at least one of A, B or C," and "at least one of the following: A, B or C" means "only A, or only B, or only C, or any combination of A, B and C."

Additionally, for the purposes of explanation and non-limitation, specific details, such as functional entities, techniques, protocols, standard, and the like are set forth for providing an understanding of the described technology. In other examples, detailed description of well-known methods, technologies, systems, architectures, and the like are omitted so as not to obscure the description with unnecessary details.

Persons skilled in the art will immediately recognize that any NW function(s) or algorithm(s) described in the present disclosure may be implemented by hardware, software, or a combination of software and hardware. Described functions may correspond to modules which may be software, hardware, firmware, or any combination thereof. The software implementation may include computer executable instructions stored on computer readable medium, such as a memory or other types of storage devices. For example, one or more microprocessors or general-purpose computers with communication processing capability may be programmed with corresponding executable instructions and carry out the described NW function(s) or algorithm(s). The microprocessors or general-purpose computers may be formed of Application-Specific Integrated Circuits (ASICs), programmable logic arrays, and/or one or more Digital Signal Processor (DSPs). Although some of the example implementations described in this specification are oriented to software installed and executing on computer hardware, nevertheless, alternative example implementations implemented as firmware, as hardware, or as a combination of hardware and software are well within the scope of the present disclosure.

The computer readable medium includes, but is not limited to, Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

A radio communication NW architecture (e.g., a Long-Term Evolution (LTE) system, an LTE-Advanced (LTE-A) system, an LTE-Advanced Pro system, or a 5G New Radio (NR) Radio Access Network (RAN)) typically includes at least one Base Station (BS), at least one User Equipment (UE), and one or more optional NW elements that provide connection toward the NW. The UE communicates with the NW (e.g., a Core Network (CN), an Evolved Packet Core (EPC) NW, an Evolved Universal Terrestrial Radio Access Network (E-UTRAN), a 5G Core (5GC), or an internet), through a RAN established by one or more BSs.

It should be noted that, in the present application, a UE may include, but is not limited to, a mobile station, a mobile terminal or device, or a user communication radio terminal. For example, a UE may be a portable radio equipment, which includes, but is not limited to, a mobile phone, a tablet, a wearable device, a sensor, a vehicle, or a Personal Digital Assistant (PDA) with wireless communication capability. The UE is configured to receive and transmit signals over an air interface to one or more cells in a radio access NW.

A BS may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic Wideband-Code Division Multiple Access (W-CDMA), HighSpeed Packet Access (HSPA), LTE, LTE-A, eLTE (evolved LTE, e.g., LTE connected to 5GC), NR (often referred to as 5G), and/or LTE-A Pro. However, the scope of the present application should not be limited to the above-mentioned protocols.

A BS may include, but is not limited to, a node B (NB) as in the UMTS, an evolved Node B (eNB) as in the LTE or LTE-A, a Radio Network Controller (RNC) as in the UMTS, a Base Station Controller (BSC) as in the GSM/GERAN, a ng-eNB as in an Evolved Universal Terrestrial Radio Access (E-UTRA) BS in connection with the 5GC, a next-generation Node B (gNB) as in the 5G-RAN, and any other apparatus capable of controlling radio communication and managing radio resources within a cell. The BS may serve one or more UEs through a radio interface.

The BS is operable to provide radio coverage to a specific geographical area using multiple cells forming the radio access NW. The BS supports the operations of the cells. Each cell is operable to provide services to at least one UE within its radio coverage. More specifically, each cell (often referred to as a serving cell) provides services to serve one or more UEs within its radio coverage (e.g., each cell schedules the downlink (DL) and optionally uplink (UL) resources to at least one UE within its radio coverage for DL and optionally UL packet transmissions). The BS may communicate with one or more UEs in the radio communication system through multiple cells. A cell may allocate Sidelink (SL) resources for supporting Proximity Service (ProSe) or Vehicle to Everything (V2X) service. Each cell may have overlapped coverage areas with other cells.

As discussed above, the frame structure for NR is to support flexible configurations for accommodating various next-generation (e.g., 5G) communication requirements, such as Enhanced Mobile Broadband (eMBB), Massive Machine Type Communication (mMTC), Ultra-Reliable and Low-Latency Communication (URLLC), while fulfilling high reliability, high data rate and low latency requirements. The Orthogonal Frequency-Division Multiplexing (OFDM) technology as agreed in the 3rd Generation Partnership Project (3GPP) may serve as a baseline for NR waveform. The scalable OFDM numerology, such as the adaptive sub-carrier spacing, the channel bandwidth, and the Cyclic Prefix (CP) may also be used. Additionally, two coding schemes are considered for NR: (1) Low-Density Parity-Check (LDPC) code and (2) Polar Code. The coding scheme adaption may be configured based on the channel conditions and/or the service applications.

Moreover, it is also considered that in a transmission time interval TX of a single NR frame, a DL transmission data, a guard period, and an UL transmission data should at least be included, where the respective portions of the DL transmission data, the guard period, and the UL transmission data should also be configurable, for example, based on the NW dynamics of NR. In addition, SL resources may also be provided in an NR frame to support ProSe services or V2X services.

In addition, the terms "system" and "NW" herein may be used interchangeably. The term "and/or" herein is only an association relationship for describing associated objects, and represents that three relationships may exist. For example, A and/or B may indicate that A exists alone, A and B exist at the same time, or B exists alone. In addition, the character "/" herein generally represents that the former and latter associated objects are in an "or" relationship. Multiple PLMNs may operate on the unlicensed spectrum. Multiple PLMNs may share the same unlicensed carrier. The PLMNs may be public or private. Public PLMNs may be (but not limited to) the operators or virtual operators, which provides radio services to the public subscribers. Public PLMNs may own the licensed spectrum and support the radio access technology on the licensed spectrum as well. Private PLMNs may be (but not limited to) the micro-operators, factories, or enterprises, which provides radio services to its private users (e.g., employees or machines). In some implementations, public PLMNs may support more deployment scenarios (e.g., carrier aggregation between licensed band NR (PCell) and NR-U (SCell), dual connectivity between licensed band LTE (PCell) and NR-U (PSCell), stand-alone NR-U, an NR cell with DL in unlicensed band and UL in licensed band, dual connectivity between licensed band NR (PCell) and NR-U (PSCell)). In some implementations, private PLMNs mainly support (but not limited to) the stand-alone unlicensed radio access technology (e.g., stand-alone NR-U).

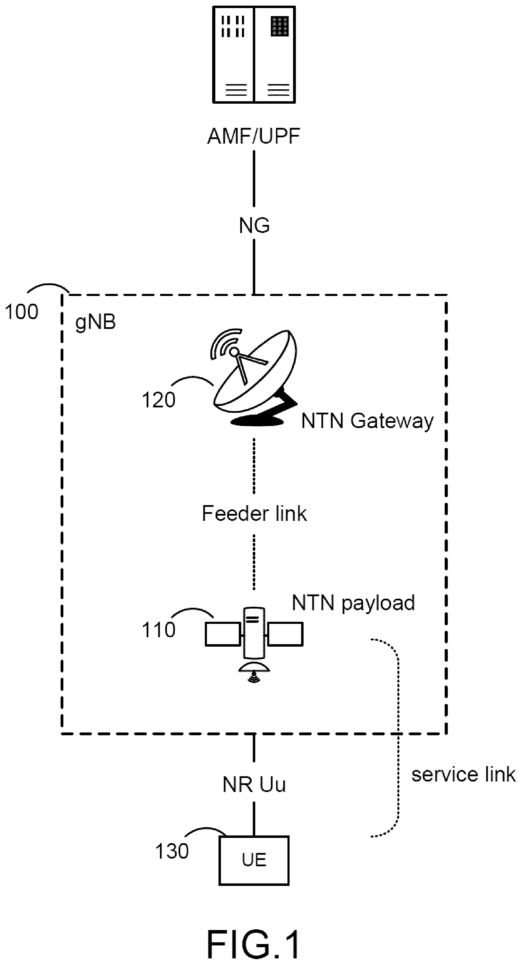

FIG. 1 is a diagram illustrating a non-terrestrial network (NTN), according to an example implementation of the present disclosure.

Referring to FIG. 1, an NTN may provide a non-terrestrial NR access to a UE by means of an NTN payload 110 and an NTN gateway (GW) 120 forming a gNB 100. A service link may be established between the NTN payload 110 and the UE 130, and a feeder link may be established between the NTN GW 120 and the NTN payload 110.

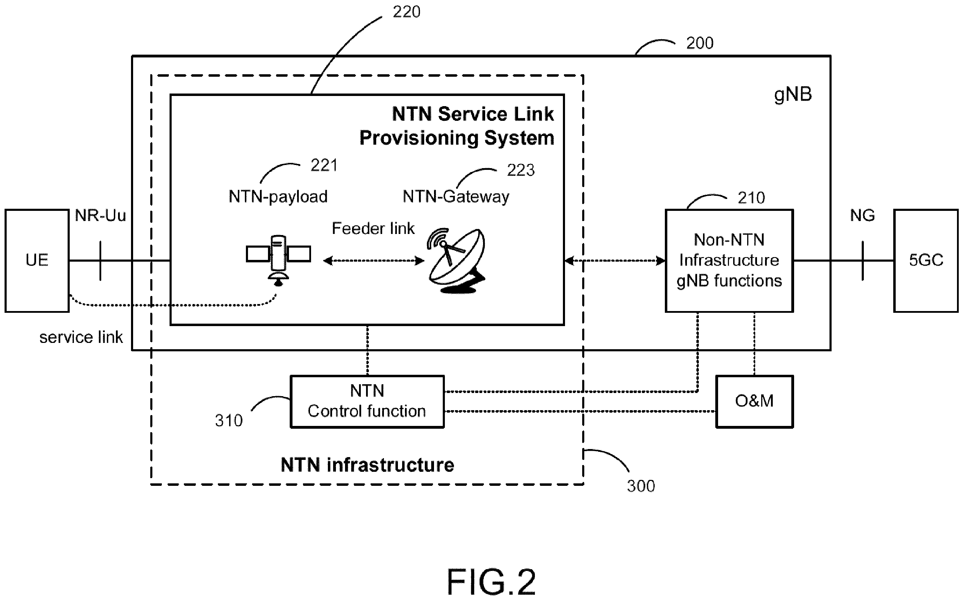

FIG. 2 is a diagram illustrating an NTN for a transparent NTN payload, according to an example implementation of the present disclosure.

Referring to FIG. 2, a next generation node B (gNB) 200 may be divided into non-NTN infrastructure gNB functions 210 and an NTN service link provisioning system 220. An NTN infrastructure 300 may be divided into two components: the NTN service link provisioning system 220 and an NTN control function 310. The NTN service link provisioning system 220 may include one or more NTN payloads 221 and one or more NTN GWs 223.

Three types of service links may be supported:

(1) Earth-fixed: These types of service links may be provisioned by the beams that continuously cover the same geographical areas at all times (e.g., GeoSynchronous Orbit (GSO) satellites).

(2) Quasi-earth-fixed: These types of service links may be provisioned by the beams that cover one geographic area for a limited period of time and cover a different geographic area during another period of time (e.g., Non-GeoSynchronous Orbit (NGSO) satellites with steerable beams).

(3) Earth-moving: These types of service links may be provisioned by the beams the coverage area of which slides over the Earth's surface (e.g., NGSO satellites with fixed or non-steerable beams).

With the NGSO satellites, the gNB may provide either a quasi-earth-fixed or an earth-moving service link. Conversely, a gNB operating with GSO satellites may provide an earth-fixed service link.

In some implementations, the UE supporting NTN may be GNSS-capable.

In some implementations, the UE supporting NTN may be non-GNSS-capable.

In some implementations, system information block type 19 (SIB 19) may include satellite assistance information for an NTN access.

To accommodate the propagation delay in NTNs, several timing relationships may be enhanced by a common timing advance (TA) and two scheduling offsets: K_offset and K_mac.

The common TA may be configured as an offset that corresponds to the round-trip time (RTT) between a reference point (RP) and the NTN payload.

The K_offset may be configured as a scheduling offset that needs to be larger than or equal to the sum of the service link RTT and the common TA.

The K_mac may be configured as an offset that needs to be larger than or equal to the RTT between the RP and the gNB.

DL and UL transmissions may be frame-aligned at a UL timing synchronization RP with an offset given by $N_{TA,offset}$.

The offset K_mac may be used to delay the application of a DL configuration indicated by a medium access control (MAC) control element (CE) command on a physical downlink shared channel (PDSCH) and to estimate the UE-gNB RTT. The offset K_mac may be provided by the network when the DL and UL frame timings are not aligned at the gNB. The offset K_mac may also be utilized in a random access (RA) procedure to determine a start time of a random access response (RAR)/MsgB window following an Msg1/MsgA transmission.

For the serving cell, the network may broadcast the valid ephemeris information and the common TA parameters. The UE may have a valid Global Navigation Satellite System (GNSS) position, as well as an ephemeris and a common TA, before connecting to an NTN cell. To achieve synchronization, the UE may determine the RTT between itself (e.g., the UE) and the RP before and during the connection to the NTN cell, based on the GNSS position, the ephemeris, and the common TA parameters, and may (e.g., autonomously) pre-compensate the timing advance $T_{TA}$ for the RTT between the UE and the RP. The UL frame number i for transmission from the UE may start with the timing advance $T_{TA}$ before the start of the corresponding DL frame at the UE.

The UE may determine a frequency Doppler shift of the service link and (e.g., autonomously) pre-compensate for the frequency Doppler shift in the uplink transmissions by considering the UE's position and the ephemeris. If the UE does not have a valid GNSS position and/or a valid ephemeris, nor a common TA, the UE may not transmit until the valid GNSS position and/or the valid ephemeris, and the common TA, are regained.

In a connected mode, the UE may continuously update the TA and the frequency pre-compensation. The UE may be configured to report the TA during the RA procedures or while in the connected mode. In the connected mode, an event-triggered reporting of the TA may be supported.

While the UE may perform pre-compensation of the instantaneous Doppler shift experienced on the service link, the management of the Doppler shift experienced over the feeder link and the transponder frequency error may be left to the network implementation.

During mobility between an NTN and a terrestrial network (TN), a UE may not be required to connect to both the NTN and the TN at the same time.

It should be noted that, an NTN TN handover may include mobility in both directions, e.g., from an NTN to a TN (e.g., hand-in) and from a TN to an NTN (e.g., hand-out).

The UE may support mobility between gNBs operating with NTN payloads in different orbits (e.g., in a GSO and a NGSO at different altitudes).

Regarding conditional handovers (CHOs), an NTN may support the following triggering conditions upon which the UE may execute the CHO to a candidate cell:

(1) The RRM measurement-based event A4;
(2) A time-based triggering condition; and/or
(3) A location-based triggering condition.

The time-based or the location-based triggering condition may always be configured together with one of multiple measurement-based triggering conditions (e.g., CHO events A3/A4/A5).

It may be up to the UE implementation on how to evaluate the time-based or the location-based triggering condition together with the RRM measurement-based event.

The network may configure:

(1) multiple synchronization signal block (SSB) measurement timing configurations (SMTCs) in parallel per carrier and for a given set of cells depending on the UE capabilities;
(2) measurement gaps based on multiple SMTCs; and
(3) assistance information (e.g., the ephemeris, common TA parameters) provided in system information block type 19 (SIB19) for the UE to perform measurement on the neighboring cell(s) while in the RRC_IDLE, RRC_INACTIVE, or RRC_CONNECTED state.

An NW-controlled adjustment of the SMTCs may be based on the assistance information reported in the RRC_CONNECTED state. A UE in the RRC_IDLE or RRC_INACTIVE state may adjust the SMTCs based on the UE's location and the assistance information in the SIB19.

The assistance information (e.g., may also be referred to as UE assistance information in this disclosure) may include the service link propagation delay differences between the serving cell and the neighboring cells.

For a UE in an idle or an inactive mode, whether to perform an NTN neighboring cell measurements on a cell indicated in system information type 4 (SIB4), but not included in the SIB19, may be up to the UE implementation.

For a UE in a connected mode, whether to perform the NTN neighboring cell measurements on a cell included in the measurement configuration but not included in the SIB19 may be up to the UE implementation.

In a quasi-earth fixed cell scenario, the UE may perform the time-based and the location-based measurements on the neighboring cells while in the RRC_IDLE or RRC_INACTIVE state. The timing and location information associated with the serving cell may be provided in the SIB19. The timing information may include the coordinated universal time (UTC) when the serving cell stops serving the current geographical area. The location information may include the reference location of the serving cell and a distance threshold to the reference location.

In some implementations, the denotation "NTN GW*" may include the NTN GW 120 as illustrated in FIG. 1, the NTN GW 223 as illustrated in FIG. 2, and/or the non-NTN infrastructure gNB functions 210 as illustrated in FIG. 2.

In some implementations, the gNB denoted as "gNB#1" may include an NTN GW, and a serving cell provided via a source cell (e.g., a first satellite SAT#1) and/or the first satellite SAT#1, for example, before a satellite switching.

In some implementations, the gNB denoted as "gNB#2" may include an NTN GW, and a serving cell provided via a target cell (e.g., a second satellite SAT#2) and/or the second satellite SAT#2, for example, after the satellite switching.

In some implementations, the security key(ies) used by the UE for access stratum (AS) security between the UE and the gNB may not change. For example, the security key(ies) may be the same before and after the serving satellite switching.

In some implementations, a UE may regard the gNB, before serving a satellite switch, as the first satellite SAT#1, and the UE may regard the gNB, after the serving satellite switch, as the second satellite SAT#2.

In some implementations, if a UE receives a duration of a time for a timer, the UE may set the corresponding timer with an initial value set to the duration. The UE may start the timer when one or more conditions are met and may then decrease the timer as time goes by. When the value of the timer reaches zero, the UE may consider/determine that the timer has expired and/or may stop the timer. The UE may also stop the timer when one or more conditions are met.

In some implementations, if a UE receives a duration of a time for a timer, the UE may set the corresponding timer with an initial value set to zero. The UE may start the timer when one or more conditions are met and may then increase the timer as time goes by. When the value of the timer reaches the value of the duration, the UE may consider/determine that the timer has expired and/or may stop the timer. The UE may also stop the timer when one or more conditions are met.

In some implementations, if a UE receives a duration of a time for a timer, the UE may start the timer when one or more conditions are met. After a duration starting from the time the UE starts the timer, the UE may consider/determine that the timer has expired and/or may stop the timer. The UE may also stop the timer when one or more conditions are met.

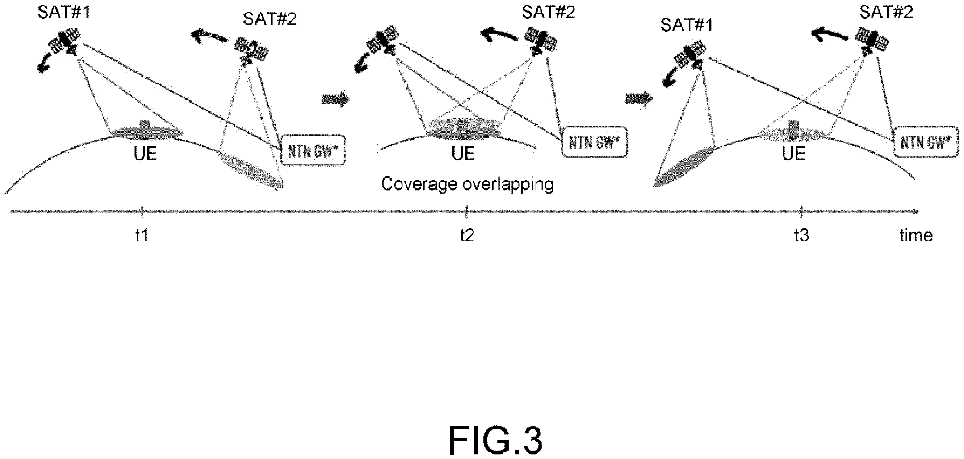

FIG. 3 is a diagram illustrating a soft satellite switching in a quasi-earth-fixed cell scenario, according to an example implementation of the present disclosure.

Referring to FIG. 3, at time t1, a UE may be served by the network via a first (e.g., source) satellite SAT#1. At time t2, before the first satellite SAT#1 transitions to a next coverage area of the first satellite SAT#1, a second (e.g., target) satellite SAT#2 may begin to provide coverage to the same area that the first satellite SAT#1 currently covers. Both the first satellite SAT#1 and the second satellite SAT#2 may be connected to the same NTN GW* through their respective feeder links, allowing the UE to potentially be covered by both satellites. At time t3, after the first satellite SAT#1 moves to the next coverage area, the UE may be served by the NW via only the second satellite SAT#2.

It should be noted that, while the UE is under the coverage of both the first satellite SAT#1 and the second satellite SAT#2, the UE may be served by the NW via either one or both of the satellites.

From the UE's perspective, in some implementations, the physical cell identity (PCI), before and after the satellite switch, may be the same, while in some other implementations, the PCI may be different before and after the satellite switch.

From the UE's perspective, in some implementations, the center frequency of the SSB transmitted by the NW via the first satellite SAT#1 and the center frequency of the SSB transmitted by the NW via the second satellite SAT#2 may be the same, while in some other implementations, the center frequency of the SSB transmitted by the NW via the first satellite SAT#1 and the center frequency of the SSB transmitted by the NW via the second satellite SAT#2 may be different.

From the UE's perspective, in some implementations, the subcarrier spacing (SCS) of the SSB transmitted by the NW via the first satellite SAT#1 and the SCS of the SSB transmitted by the NW via the second satellite SAT#2 may be the same, while in some other implementations, the subcarrier spacing (SCS) of the SSB transmitted by the NW via the first satellite SAT#1 and the SCS of the SSB transmitted by the NW via the second satellite SAT#2 may be different.

From the UE's perspective, in some implementations, the carrier frequency or center frequency of the serving cell provided via the first satellite SAT#1 and the second satellite SAT#2 may be the same, while in some other implementations, the carrier frequency or center frequency of the serving cell provided via the first satellite SAT#1 and the second satellite SAT#2 may be different.

From the UE's perspective, in some implementations, the bandwidth of the serving cell provided via the first satellite SAT#1 and the bandwidth of the serving cell provided via the second satellite SAT#2 may be the same, while in some other implementations, the bandwidth of the serving cell provided via the first satellite SAT#1 and the bandwidth of the serving cell provided via the second satellite SAT#2 may be different.

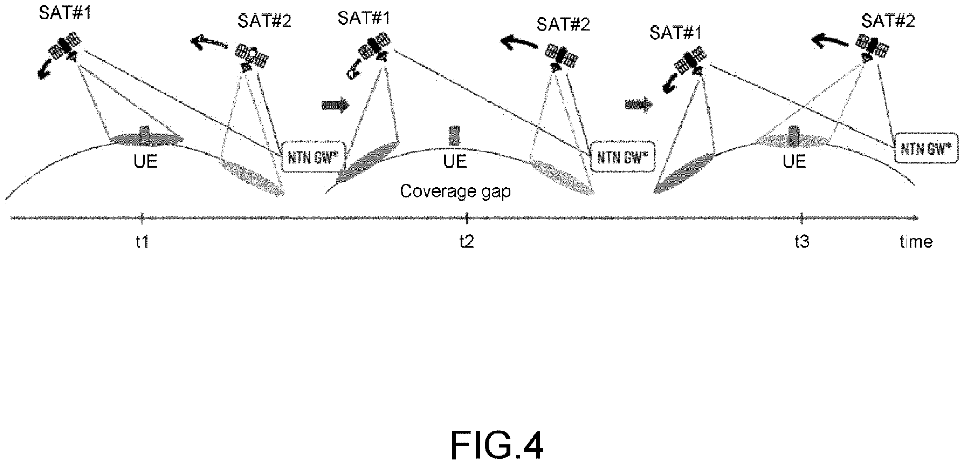

FIG. 4 is a diagram illustrating a hard satellite switching in a quasi-earth-fixed cell scenario, according to an example implementation of the present disclosure.

Referring to FIG. 4, at time t1, a UE may be served by the network via a first (e.g., source) satellite SAT#1.

Referring to FIG. 4, at time t2, before the first satellite SAT#1 switches to the next coverage area of the first satellite SAT#1, a second (e.g., target) satellite SAT#2, may start providing coverage to the same area that the first satellite SAT#1 currently covers. From the UE's perspective, there may be a coverage gap, meaning the UE may not be served by the network in the coverage gap. Both the first satellite SAT#1 and the second satellite SAT#2 may be connected to the same NTN GW* through the respective feeder links.

In some implementations, when such a condition occurs, the UE may initiate a Radio Link Failure (RLF) procedure. In some implementations, the UE may be instructed by the network not to initiate an RLF procedure during a certain time duration configured/indicated/determined by the network based on the expected duration of the coverage gap.

Referring to FIG. 4, at time t3, after the first satellite SAT#1 moves to the next coverage area, the second satellite SAT#2 may start providing coverage to the area as the first satellite SAT#1 was covering (e.g., the area in which the UE is operating) before the first satellite SAT#1 switched the coverage area. The UE may be served by the network via the second satellite SAT#2 during the time t3.

From the UE's perspective, in some implementations, the PCI, before and after the satellite switch, may be the same, while in some other implementations, the PCI may be different before and after the satellite switch may be the same.

From the UE's perspective, in some implementations, the center frequency of the SSB transmitted by the network via the first satellite SAT#1 and the center frequency of the SSB transmitted by the network via the second satellite SAT#2 may be the same, while in some other implementations, the center frequency of the SSB transmitted by the network via the first satellite SAT#1 and the center frequency of the SSB transmitted by the network via the second satellite SAT#2 may be different.

From the UE's perspective, in some implementations, the SCS of the SSB transmitted by the network via the first satellite SAT#1 and the SCS of the SSB transmitted by the network via the second satellite SAT#2 may be the same, while in some other implementations, the SCS of the SSB transmitted by the network via the first satellite SAT#1 and the SCS of the SSB transmitted by the network via the second satellite SAT#2 may be different.

From the UE's perspective, in some implementations, the carrier frequency or center frequency of the serving cell provided via the first satellite SAT#1 and the second satellite SAT#2 may be the same, while in some other implementations, the carrier frequency or center frequency of the serving cell provided via the first satellite SAT#1 and the second satellite SAT#2 may be different.

From the UE's perspective, in some implementations, the bandwidth of the serving cell provided via the first satellite SAT#1 and the bandwidth of the serving cell provided via the second satellite SAT#2 may be the same, while in some other implementations, the bandwidth of the serving cell provided via the first satellite SAT#1 and the bandwidth of the serving cell provided via the second satellite SAT#2 may be different.

In some implementations, if the PCI remains unchanged after a satellite switch, the UE may regard the serving cell's post-switch as the original serving cell, despite possible configuration changes due to the switch. This scenario may be referred to as a "serving satellite switching with PCI unchanged." Such a scenario may benefit the entire network system in terms of reduced latency and signaling overhead, particularly if Layer 1/Layer 2 (L1/L2) signaling is used instead of Layer 3 (L3) signaling. This is because the L3 signaling typically requires more latency and higher signaling overhead compared to the L1/L2 signaling.

In some implementations, the L3 signaling may include the RRC signaling or other higher layer signaling relative to the MAC layer and physical layer signaling.

In some implementations, the L1/L2 signaling may involve the MAC CE, downlink control information (DCI), and/or uplink control information (UCI).

In some implementations, the UE capabilities related to the soft satellite switching may include:

(1) Support for maintaining two or more DL and/or UL timing and frequency synchronizations with two satellites, for example, an NTN serving cell provided via the serving satellite and an NTN serving cell provided via a neighboring satellite;
(2) Support for receiving indication#1;
(3) Support for a network-controlled scheme, such as receiving indication#2; and/or
(4) Support for a UE-initiated scheme, such as measuring the SSBs with the same PCI, but from different gNBs, cells, or satellites.

In some implementations, the UEs may be assumed to support the necessary capabilities for both hard and soft satellite switchings.

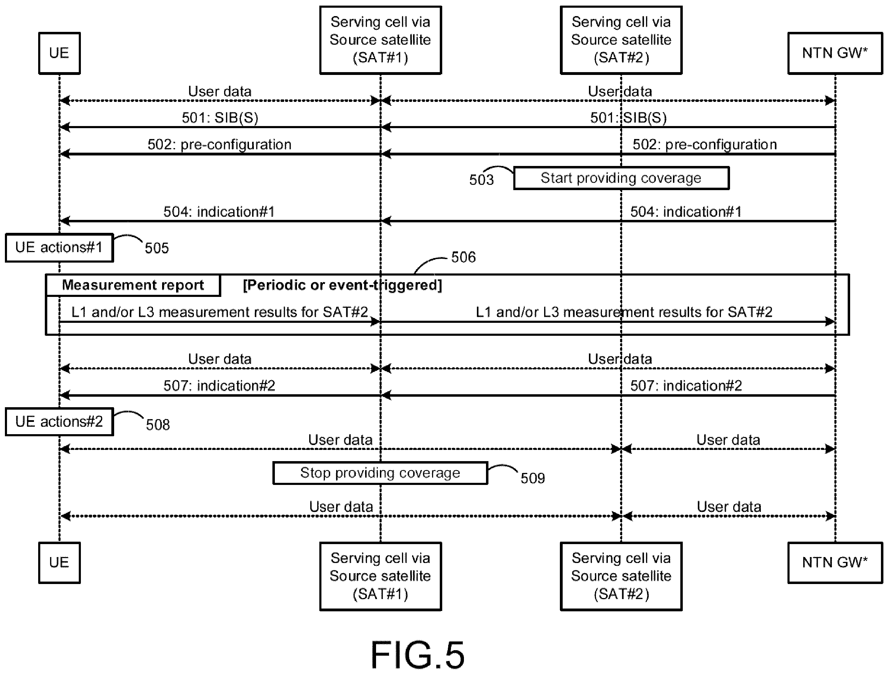

FIG. 5 is a signaling diagram illustrating a signaling-based network-controlled satellite switching procedure, according to an example implementation of the present disclosure.

FIG. 5 illustrates a signaling-based NW-controlled satellite switching procedure with PCI unchanged, in an NTN scenario. The satellite switching may be, for example, a soft or a hard satellite switching. In some implementations, certain "messages" shown in FIG. 5 may be optionally absent. In some implementations, the procedure shown in FIG. 5 may include a combination of all or part of the "messages" illustrated in FIG. 5. In some implementations, a "message" represented by a solid arrow in FIG. 5 may include any message, such as SIB(s), pre-configuration setting(s), indication#1, L1 and/or L3 measurement results for a second (e.g., target) satellite SAT#2, and indication#2. In some implementations, the "User data" represented by a double-dotted arrow in FIG. 5 may signify the transfer of UE's data between the entities that the double-dotted arrow connects.

Referring to FIG. 5, in action 501, the UE may receive one or more SIBs broadcast by the NW.

In some implementations, the received SIB(s) may include SIB 19, system information block type 2 (SIB2), system information block type 3 (SIB3), and/or SIB4.

In some implementations, the received SIB(s) may include satellite assistance information for the serving satellite/NTN serving cell. The satellite assistance information may include one or more of an *NTN-Config*, time information, a reference location, a distance threshold, one or more satellite identifications (IDs), and a list of neighboring NTN cells.

In some implementations, the *NTN-Config* may include an RRC information element (IE). The *NTN-Config* may be associated with the cell/gNB broadcasting the SIB(s). The *NTN-Config* may include one or more of the following:

(1) Ephemeris of the source satellite (e.g., the first satellite SAT#1), provided by the higher-layer parameter *ephemerisInfo*;
(2) Common TA parameters of the source satellite, provided by the higher-layer parameter *ta-Info*;
(3) Validity duration for both the ephemeris and the common TA parameters of the source satellite, provided by the higher-layer parameter *ntn-UlSyncValidityDuration*;
(4) Epoch time for both the ephemeris and the common TA parameters of the source satellite, provided by the higher-layer parameter *epochTime*; and/or
(5) Cell-specific K_offset and K_mac, provided by higher layer parameters *cellSpecificKoffset* and *Kmac,* respectively.

In some implementations, the time information may indicate when the cell provided via the NTN quasi-fixed system should stop serving its current coverage area, provided by t-*Service.*

In some implementations, the reference location may include a reference location of the serving cell provided via the NTN quasi-earth-fixed system. The reference location may be used for a location-based measurement initiation in the RRC_IDLE and RRC_INACTIVE states.

In some implementations, the distance threshold may indicate the distance of the UE from the serving cell reference location. The threshold may be used for a location-based measurement initiation in the RRC_IDLE and RRC_INACTIVE states.

In some implementations, each satellite ID may indicate, or be associated with, a set of satellite assistance information. The satellite assistance information may be included in the *NTN-Config.*

In some implementations, the list of neighboring NTN cells may include the *NTN-Config* IE and/or the carrier frequency (e.g., provided by a higher-layer parameter *carrierFreq*) and/or the PCI (e.g., provided by a higher-layer parameter *physCellId*) and/or the satellite ID, of each of the neighboring NTN cells.

In some implementations, the number of neighboring cells in the list may be up to 4.

In some implementations, the number of neighboring cells in the list may exceed 4.

In some implementations, the higher-layer parameters of one or more neighboring cells may be set to the same value as the PCI of the NTN serving cell provided via the source satellite (e.g., the first satellite SAT#1).

In some implementations, the *physCellId* of one or more neighboring cells may be absent, indicating that the PCI(s) is the same as the NTN serving cell provided via the source satellite (e.g., the first satellite SAT#1).

Referring back to FIG. 5, in action 502, the UE may receive one or more pre-configurations from the NW.

In some implementations, the received pre-configuration(s) may be carried in an RRC message, such as an *RRCReconfiguration* message.

In some implementations, the received pre-configuration(s) may include one or more RRC parameters/IEs.

In some implementations, if multiple pre-configurations are received by the UE, each pre-configuration may be associated with a different target satellite/target NTN cell.

In some implementations, each pre-configuration may include one or more of a first indication indicating a neighboring NTN cell, a satellite ID, satellite assistance information, SSB indices of multiple SSBs, time domain information about the SSBs, one or more measurement configurations, one or more SMTC configurations, information about the UL power control for PUSCH and/or PUCCH and/or Sounding Reference Signal (SRS), an UL bandwidth part (BWP) ID, a DL BWP ID, a second indication indicating whether the UE performs an RA procedure, a third indication indicating an N_TA value, and/or configuration(s) including physical random access channel (PRACH) resource(s).

In some implementations, the first indication may include an indication indicating a neighboring NTN cell via the target satellite (e.g., the second satellite SAT#2) from the list of neighboring NTN cells included in a SIB (e.g., if the target satellite (NTN cell) is included in the list of neighboring NTN cells in the SIB).

In some implementations, the SIB may be a SIB 19, SIB2, SIB3, or SIB4.

In some implementations, the first indication may be an integer representing the order of an entry in the list of neighboring NTN cells included in the SIB. For example, if the first indication is "1", the satellite assistance information (e.g., *NTN-Config*) of the target satellite (e.g., the second satellite SAT#2) may be the *NTN-Config* of the first neighboring NTN cell in the list; if the indication is "2", the satellite assistance information (e.g., *NTN-Config*) of the target satellite may be the *NTN-Config* of the second neighboring NTN cell in the list; and so on.

In some implementations, the UE may use the satellite assistance information (e.g., *NTN-Config*) associated with the satellite ID, included in the pre-configuration, during the satellite switching procedure.

In some implementations, the satellite assistance information included in the pre-configuration may include satellite assistance information of the NTN serving cell provided via the target satellite (e.g., the second satellite SAT#2).

In some implementations, the satellite assistance information included in the pre-configuration may include one or more of the following:

(1) *NTN-Config* RRC IE of the target satellite (e.g., the second satellite SAT#2);
(2) The satellite ID of the target satellite (e.g., the second satellite SAT#2);
(3) Time information indicating when the cell provided via the NTN quasi-fixed system should stop serving its current coverage area, provided by *t-Service;*
(4) A reference location of the serving cell provided via the NTN quasi-earth-fixed system. The reference location may be used for a location-based measurement initiation in the RRC_IDLE and RRC_INACTIVE states; and/or
(5) A distance threshold indicating the distance of the UE from the serving cell reference location. The threshold may be used for a location-based measurement initiation in the RRC_IDLE and RRC_INACTIVE states.

In some implementations, the SSB indices included in the pre-configuration may be SSB indices of the SSBs transmitted from the target satellite (e.g., the second satellite SAT#2).

In some implementations, the SSB indices of the SSBs transmitted by the target satellite (e.g., second satellite SAT#2) may be represented by a bitmap.

In some implementations, the size of the bitmap (the number of bits) may be the maximum number of SSBs per half frame (e.g., 4, 8, or 64).

In some implementations, the bitmap may indicate the time domain positions of the SSBs transmitted by the target satellite (e.g., the second satellite SAT#2) in a half frame.

In some implementations, the first/leftmost bit of such a bitmap may correspond to an SSB index 0, the second bit may correspond to an SSB index 1, and so on.

In some implementations, a value of 0 in the bitmap may indicate that the corresponding SSB is not transmitted, while a value of 1 may indicate that the corresponding SSB is transmitted.

In some implementations, the size of (e.g., the number of bits in) the bitmap may be 8 bits.

In some implementations, when the maximum number of SSBs per half frame is 4, only the 4 leftmost bits in the bitmap may be valid, and the UE may ignore the 4 rightmost bits in the bitmap.

In some implementations, when the maximum number of SSBs per half frame is 8, all 8 bits in the bitmap may be valid.

In some implementations, the first/leftmost bit may correspond to an SSB index 0, the second bit may correspond to an SSB index 1, and so on.

In some implementations, when the maximum number of SSBs per half frame is 64, all 8 bits in the bitmap may be valid.

In some implementations, the first/leftmost bit may correspond to the first SSB index in each group (e.g., the SSB index 0, 8, and so on); the second bit may correspond to the second SSB index in each group (e.g., the SSB index 1, 9, and so on), and so on. Each SSB group may be determined as follows: group#1 may include SSB indices from 0 to 7, group#2 may include SSB indices from 8 to 15, and so on.

In some implementations, a value of 0 in the bitmap may indicate that the corresponding SSB(s) is/are not transmitted, while a value of 1 may indicate that the corresponding SSB(s) is/are transmitted.

In some implementations, if an SSB index indicated as transmitted from the NTN serving cell (e.g., via the source satellite (e.g., the first satellite SAT#1)) by the NW (e.g., via RRC parameter *ssb-PositionsInBurst*) is also indicated as transmitted from the target satellite (e.g., the second satellite SAT#2) by the NW via the bitmap, the UE may assume that the corresponding SSB is transmitted from the target satellite (e.g., the second satellite SAT#2). In such a case, the bitmap may override the RRC parameter *ssb-PositionsInBurst* when both indicate that an SSB with a particular index is transmitted.

In some implementations, if an SSB index indicated as transmitted from the NTN serving cell (e.g., via the source satellite (e.g., the first satellite SAT#1)) by the NW (e.g., via RRC parameter *ssb-PositionsInBurst*) is also indicated as transmitted from the target satellite (e.g., the second satellite SAT#2) by the NW via the bitmap, the UE may assume that the corresponding SSB is transmitted from the NTN serving cell provided via the source satellite (e.g., the first satellite SAT#1). In such a case, the RRC parameter *ssb-PositionsInBurst* may override the bitmap when both indicate that an SSB with a particular index is transmitted.

In some implementations, the UE may assume that the bitmap and the RRC parameter *ssb-PositionsInBurst* do not simultaneously indicate a value of 1 (e.g., SSB is transmitted) for the same SSB index/indices.

In some implementations, the time domain information included in the pre-configuration may be time domain information about the SSBs transmitted from the target satellite (e.g., the second satellite SAT#2).

In some implementations, the UE may assume that the SSBs received in the time duration indicated by the time domain information are transmitted from the target satellite (e.g., the second satellite SAT#2). When the UE is required/configured to perform measurements on the SSBs of the target satellite (e.g., the second satellite SAT#2), the UE may measure the SSBs received during the duration indicated by the time domain information.

In some implementations, the time domain information may be one, or a combination, of the following:

(1) One or more hyper System Frame Number(s) (SFN(s));
(2) One or more SFN(s);
(3) One or more subframe number(s);
(4) One or more slot number(s); and/or
(5) One or more SSB indices.

In some implementations, each of the one or more measurement configurations may include one or more measurement objects, which may include the time/frequency location and SCS of the SSB of the NTN serving cell provided via the target satellite (e.g., the second satellite SAT#2).

In some implementations, the one or more measurement configurations may include one or more SMTC configurations. The UE may perform the measurements on the SSBs received from the target satellite (e.g., the second satellite SAT#2) during the SMTC window.

In some implementations, the one or more measurement configurations may include one or more CSI report configurations.

In some implementations, the CSI report(s) may be configured as periodic, semi-persistent on a Physical Uplink Control Channel (PUCCH), semi-persistent on a Physical Uplink Shared Channel (PUSCH), or aperiodic.

In some implementations, the report quantity configuration of the CSI report(s) may be configured as "ssb-Index-RSRP", which may mean that the UE may report the CSI measured reference signal received power (RSRP) over one or more SSB indices.

In some implementations, the one or more SMTC configurations included in the pre-configuration may be for measurement(s) on the SSB of the NTN serving cell provided via the target satellite (e.g., the second satellite SAT#2).

In some implementations, the UL power control for PUSCH and/or PUCCH and/or SRS may include one or more of the following:

(1) One or more p0-alpha sets (ID);
(2) Path loss reference signal (PL-RS) ID, e.g., *pathlossReferenceIndex,* which may indicate a reference signal that may be used by the UE to estimate the path-loss and to calculate the power for UL transmission(s);
(3) Nominal PUSCH power configuration(s), e.g., *preambleReceivedTargetPower, p0-NominalWithoutGrant, p0-NominalWithGrant, p0-PUCCH-Value,* which may be used by the UE to calculate the power of UL transmission(s); and/or
(4) An index of a PUSCH power control adjustment state, which may be used by the UE to perform closed-loop power control and calculate the power of UL transmission(s).

In some implementations, the UL BWP ID may indicate the first active BWP ID after a satellite switch or after a successful reception of one or more indication#2s.

In some implementations, the DL BWP ID may indicate the first active BWP ID after a satellite switch or after a successful reception of one or more indication#2s.

In some implementations, the second indication may be an indication of whether the UE may (be configured/authorized to) perform a (2-step/4-step) RA procedure upon the reception of the indication#2 (e.g., a switching command), the ENUMERATED set to "{enabled}," or the ENUMERATED set to "{enabled, disabled}".

In some implementations, the third indication may be an indication of the N_TA value that the UE may use to determine the transmission time of the preamble(s)/MSG1/MSGA, which is part of the (4-step/2-step) RA procedure upon the reception of the indication#2.

In some implementations, the third indication may instruct the UE to use the N_TA value equal to 0 or to use the N_TA value equal to the current stored N_TA value.

In some implementations, the third indication may provide the UE with a specific N_TA value.

In some implementations, the configuration of a PRACH resource may include one or more of a preamble index, a time-domain resource, and a frequency-domain resource.

Referring back to FIG. 5, in action 503, the coverage area of the serving cell provided via the target satellite (e.g., the second satellite SAT#2) may start covering the coverage area of the serving cell provided via the source satellite (e.g., the first satellite SAT#1).

In action 504, the UE may receive one or more indication#1s from the NW.

In some implementations, the one or more indication#1s may indicate that an NTN serving cell provided via the target satellite (e.g., the second satellite SAT#2) starts covering the coverage area of the serving cell provided via the source satellite (e.g., the first satellite SAT#1).

In some implementations, the one or more indication#1s may be transmitted via the source satellite (e.g., the first satellite SAT#1).

In some implementations, one of the one or more indication#1s may include a MAC CE.

In some implementations, the UE may transmit a hybrid automatic repeat request (HARQ) acknowledgement (ACK) information bit in response to the decoding result of the PDSCH carrying the MAC CE (e.g., the indication#1).

In some implementations, one of the one or more indication#1s may be group-common DCI. The group-common DCI may be DCI with cyclic redundancy check (CRC) scrambled by a group-common radio network temporary identifier (RNTI) (e.g., G-RNTI) or an RNTI corresponding to the NTN.

In some implementations, one of the one or more indication#1s may be UE-specific DCI with CRC scrambled by a UE-specific RNTI, e.g., a cell RNTI (C-RNTI), a configured scheduling RNTI (CS-RNTI), a modulation and coding scheme RNTI (MCS-RNTI), or an NTN-specific RNTI.

In some implementations, the DCI may schedule a PDSCH. The UE may transmit a HARQ-ACK information bit in response to receiving the PDSCH in a slot indicated by a field (e.g., PDSCH-to-HARQ_feedback timing indicator field) included in the DCI.

In some implementations, if the UE transmits a negative acknowledgement (NACK), in response to the scheduled PDSCH reception, to the NW, the UE may apply the information indicated by the indication#1.

In some implementations, regardless of whether the UE transmits an ACK or a NACK, in response to the scheduled PDSCH reception, to the NW, the UE may apply the information indicated by the indication#1.

In some implementations, the DCI may be DCI without a DL assignment. In other words, the DCI may not schedule the PDSCH reception(s). In some implementations, the NW may set one or more fields included in the DCI to a specific value. In some implementations, the NW may scramble the CRC of the DCI with a specific RNTI (e.g., C-RNTI, CS-RNTI, MCS-RNTI, or other RNTI). If the UE detects that the one or more fields included in the DCI are set to the specific value and/or if the UE finds that the CRC of the DCI is scrambled by the specific RNTI, the UE may recognize that the DCI does not schedule the PDSCH reception(s).

In some implementations, if the UE transmits the HARQ information, in response to the DCI reception, to the NW, the UE may apply the information indicated by the indication#1. The HARQ information may include an ACK-only, a NACK-only, or ACK/NACK information. The ACK-only may imply that the UE only transmits the ACK. The NACK-only may imply that the UE only transmits the NACK. The ACK/NACK may imply that the UE may transmit the ACK or the NACK.

In some implementations, regardless of whether the UE transmits an ACK or a NACK, in response to the DCI reception, to the NW, the UE may apply the information indicated by theindication#1.

In some implementations, the DCI may include a field to indicate which pre-configuration a UE should apply. The field may indicate a satellite ID or an indication of a neighboring NTN cell.

In some implementations, one of the one or more indication#1s may be a SIB or part of a SIB. The SIB may be transmitted to the UE via broadcasting or UE-specific dedicated control signaling.

In some implementations, the SIB may be a SIB19, SIB2, SIB3 or SIB4.

In some implementations, the UE may be requested by the NW to re-acquire the SIB.

In some implementations, if the indication#1 is present in the SIB, a UE in the RRC_IDLE state may perform an initial access and/or an initiate RRC connection establishment procedure and/or a (2-step/4-step) RA procedure using the information of the target satellite (e.g., second satellite SAT#2) indicated by the indication#1.

In some implementations, the UE may use the satellite assistance information indicated in the indication#1 to perform the DL synchronization and the UL transmission. Specifically, the UE may use the common TA parameters and the ephemeris of the target satellite (e.g., second satellite SAT#2) to determine the TA value when performing the UL transmissions during the RA procedure.

In some implementations, the UE may use the SSBs with the SSB indices indicated by the indication#1 to determine the transmission occasion(s) of the RA preambles (e.g., the PRACH occasion(s)) during the RA procedure.

In some implementations, the one or more indication#1s may include one or more of a measurement object ID, an indication of a neighboring NTN cell via the target satellite, a satellite ID, SSB indices, frequency location(s), a bit indicating that the target satellite is present, a DL BWP ID, and a UL BWP ID.

In some implementations, the measurement object ID may indicate that the measurement object is configured in the pre-configuration.

In some implementations, the indication may indicate a neighboring NTN cell via the target satellite (e.g., second satellite SAT#2) from the list of neighboring NTN cells included in the SIB 19.

In a case that the global synchronization channel numbers (GSCNs) are the same, the one or more indication#1s may include the SSB indices transmitted from the target satellite (e.g., second satellite SAT#2).

In a case that the GSCNs are different, the one or more indication#1s may include the frequency location (e.g., NR-ARFCN/E-UTRA-ARFCN) of the SSBs transmitted from the target satellite (e.g., second satellite SAT#2).

In a case that the indication#1 include DCI, the indication#1 may include a bit indicating that the target satellite (e.g., second satellite SAT#2) is present. In some implementations, the DCI may include a 1-bit field to indicate that the target satellite (e.g., second satellite SAT#2) is present. The DCI may be DCI with or without a DL assignment.

In some implementations, the DL BWP ID may indicate the first active DL BWP after a satellite switch or a successful reception of one or more indication#2s.

In some implementations, the UL BWP ID may indicate the first active UL BWP after a satellite switch or a successful reception of one or more indication#2s.

Referring back to FIG. 5, in action 505, the UE may perform UE actions#1 (e.g., upon a successful reception of the indication#1).

In some implementations, the UE actions#1 may include one or more of the following:

(1) in a case that the indication#1 includes measurement configuration ID(s) (e.g., *MeasID*(s)), activating the indicated measurement configuration(s);

(2) computing the TA value based on the common TA parameters and the ephemeris of the NTN serving cell provided via the target satellite (e.g., second satellite SAT#2);

(3) performing a UL frequency synchronization based on the satellite assistance information (e.g., *NTN-Config*) of the target satellite (e.g., second satellite SAT#2) (e.g., the satellite assistance information associated with the satellite ID or the neighboring NTN cell indicated by the pre-configuration or the indication#1);

(4) performing a DL sync (e.g., a DL synchronization procedure) based on the SSBs with SSB indices belonging to the target satellite (e.g., second satellite SAT#2) (e.g., the GSCN may be the same); and/or

(5) in a case that the indication#1 is transmitted via the SIB, and a bit, or one or more fields, in the indication#1 indicates that the target satellite (e.g., second satellite SAT#2) is present, performing an L1/L3 measurement on the SSBs transmitted by the target satellite (e.g., second satellite SAT#2) or belonging to the target satellite (e.g., second satellite SAT#2), where the SSB indices of the SSBs may be indicated in a SIB (e.g., SIB 19, SIB2, SIB3, SIB4), or may be provided/configured in the pre-configuration.

Referring back to FIG. 5, in action 506, the UE may transmit/send/report the measurement result(s)/report(s) of the serving cell provided via the target satellite (e.g., second satellite SAT#2) to the NW on the serving cell provided via the source satellite (e.g., first satellite SAT#1) (e.g., via a report configuration in the pre-configuration along with the measurement configuration).

In some implementations, the UE may additionally be configured to perform an L1 or L3 measurement on the serving cell provided via the source satellite (e.g., first satellite SAT#1). The measured signal may include the SSBs received from the source satellite (e.g., first satellite SAT#1).

In some implementations, the measurement result(s)/report(s) may be the result(s) of an L1 measurement (e.g., the L1 measurement results/reports).

In some implementations, the L1 measurement result(s)/report(s) may be a type of uplink control information (UCI). For example, the L1 measurement result(s)/report(s) may include the channel state information (CSI) report(s).

In some implementations, the L1 measurement result/report may be transmitted on the PUCCH or the PUSCH, depending on whether the measurement result/report is a periodic, semi-persistent, or aperiodic CSI report.

In some implementations, the L1 measurement and/or the L1 measurement result/report may be triggered/activated by the indication#1 or upon a successful reception of the indication#1.

In some implementations, in a case that the L1 measurement/CSI report is configured as "semi-persistent", the L1/measurement/CSI report may be activated by the indication#1. In such a case, the UL grant (e.g., for the report on the PUSCH) or the PUCCH resource (for the report on the PUCCH) may be indicated by the indication#1.

In some implementations, the transmission of the L1 measurement results/reports may be triggered by one or more events.

In some implementations, the L1 measurement report may include a satellite ID and/or an SSB-RSRP and/or an SSB resource index (SSBRI).

In some implementations, the measurement result(s)/report(s) may be the result(s) of an L3 measurement. The L3 measurement may be configured via the pre-configuration(s).

In some implementations, the report type of the L3 measurement may be configured as a periodical measurement report.

In some implementations, the report type of the L3 measurement may be configured as an event-triggered measurement report.

In some implementations, the event may be one of the following: Event A1, Event A2, Event A3, Event A4, Event A5, Event A6, Event D1, CondEvent A3, CondEvent A4, CondEvent A5, CondEvent D1, and/or CondEvent T1. Definitions of the aforementioned events above are as follows.

Event A1: The RSRP/RSRQ/SINR of a serving cell becomes better than an absolute threshold.

Event A2: The RSRP/RSRQ/SINR of a serving cell becomes worse than an absolute threshold.

Event A3: The RSRP/RSRQ/SINR of a neighbor cell becomes amount of offset better than the RSRP/RSRQ/SINR of the PCell/PSCell.

Event A4: The RSRP/RSRQ/SINR of a neighbor cell becomes better than an absolute threshold.

Event A5: The RSRP/RSRQ/SINR of the PCell/PSCell becomes worse than a first absolute threshold and the RSRP/RSRQ/SINR of a neighbor cell/SCell becomes better than a second absolute threshold.

Event A6: The RSRP/RSRQ/SINR of a neighbor cell becomes amount of offset better than an SCell.

Event D1: The distance between the UE and a reference location *referenceLocation1* becomes (e.g., in units of meters or kilometers) greater than a configured threshold *distanceThreshFromReference1* (e.g., also in units of meters or kilometers), and the distance between the UE and another reference location *referenceLocation2* becomes less than another configured threshold *distance ThreshFromReference2*.

CondEvent A3: The RSRP/RSRQ/SINR of a conditional reconfiguration candidate becomes amount of offset better than the RSRP/RSRQ/SINR of the PCell/PSCell

CondEvent A4: The RSRP/RSRQ/SINR of a conditional reconfiguration candidate becomes better than an absolute threshold.

CondEvent A5: The RSRP/RSRQ/SINR of the PCell/PSCell becomes worse than an absolute threshold1 AND the RSRP/RSRQ/SINR of a conditional reconfiguration candidate becomes better than another absolute threshold2.

CondEvent D1: The distance between the UE and a reference location *referenceLocation1* of a conditional reconfiguration candidate becomes greater than a configured threshold *distanceThreshFromReference1,* and the distance between the UE and another reference location *referenceLocation2* of a conditional reconfiguration candidate becomes less than another configured threshold *distance ThreshFromReference2*.

CondEvent T1: A time measured at the UE becomes greater than a configured threshold *tl-Threshold* but is less than *tl-Threshold + duration,* where the *duration* may be configured by the NW.

In some implementations, the report of the L3 measurement may include the RSRP of the SSBs received from the target satellite (e.g., second satellite SAT#2), as indicated by the pre-configuration or the indication#1.

In some implementations, the report of the L3 measurement may include the RSRQ or the signal-to-interference-plus-noise ratio (SINR).

In some implementations, the L3 measurement result/report may include the RSRP of SSB(s) and a satellite ID.

In some implementations, the L3 measurement result/report may include the RSRP of SSB(s) and an indication. When the indication is present and/or is configured as to have a first value, it may indicate that this L3 measurement result/report is associated with the target satellite, which is indicated in the pre-configuration or indication#1. When the indication is absent or is configured as to have a second value, it may indicate that this L3 measurement result/report is not associated with the target satellite, which is indicated in the pre-configuration or indication#1.

Referring back to FIG. 5, in action 507, the UE may receive one or more indication#2s from the NW.

In some implementations, the indication#2 may include as a satellite switching command.

In some implementations, the indication#2 may be a MAC CE.

In some implementations, the indication#2 may be UE-specific DCI with CRC scrambled by a UE-specific RNTI (e.g., C-RNTI, CS-RNTI, MCS-RNTI, or an NTN specific RNTI).

In some implementations, the indication#2 may be group-common DCI with CRC scrambled by a group-common RNTI or an NTN specific RNTI.

In some implementations, the received one or more indication#2s may include one or more of an indication, information related to UL power control, a DL BWP ID, a UL BWP ID, and a preamble index.

In some implementations, the indication may be a beam indication of a specific channel(s) and/or a specific reference signal(s) (e.g., transmission configuration indicator (TCI) state(s)).

In some implementations, the DL BWP ID may indicate the first active DL BWP after a successful reception of the indication#2.

In some implementations, the UL BWP ID may indicate the first active UL BWP after a successful reception of the indication#2.

Referring back to FIG. 5, in action 508, the UE may transmit (e.g., via an RRC message or ARQ/HARQ ACK-information) the acknowledgement of the indication#2 (e.g., upon a successful reception of the indication#2) to the NW. In some implementations, the UE may perform UE actions#2.

In some implementations, the UE actions#2 may include one or more of the following:

(1) applying the beam indication (e.g., TCI state(s)) indicated by the indication#2 or provided by the pre-configuration for next UL transmissions and/or DL receptions;
(2) applying the information related to UL power control indicated by the indication#2 or provided by the pre-configuration for next UL transmissions;
(3) switching the active DL BWP based on the DL BWP ID indicated by the indication#2/pre-configuration;
(4) switching the active UL BWP based on the UL BWP ID indicated by the indication#2/pre-configuration;
(5) re-acquiring system information (e.g., SIB1 and/or other SIBs such as SIB 19), for example, regardless of whether the corresponding *valueTag* has changed or not;

(6) performing a RACH-based action: in a case that the indication#1, the indication#2, and/or the pre-configuration indicates to the UE to perform an RA procedure, performing the RA procedure and transmitting a preamble with N_TA equal to 0, a common TA equal to a value calculated from the common TA parameters of the NTN serving cell of the target satellite (e.g., second satellite SAT#2), and a UE-specific TA equal to a value calculated from the ephemeris of the NTN serving cell of the target satellite (e.g., second satellite SAT#2); and/or

(7) in a case that the indication#1, the indication#2, and/or, the pre-configuration indicates to the UE to perform an RA procedure, performing the RA procedure and transmitting a preamble with N_TA equal to a value indicated by the indication#1/indication#2/the pre-configuration.

In some implementations, when the pre-configuration or the indication#2 provides/indicates a preamble index, the UE may use the provided/indicated preamble index for the preamble transmission.

In some implementations, the time-domain and/or frequency-domain resource for the PRACH transmission may be provided/indicated by the pre-configuration or the indication#2.

In some implementations, the UE may first transmit the acknowledgement of the indication#2 to the NW, and then perform the UE actions#2.

In some implementations, the UE may first perform the UE actions#2, and then transmit the acknowledgement of the indication#2 to the NW.

In some implementations, in a case that the UE decodes the indication#2 successfully, the UE may transmit an ACK (e.g., HARQ-ACK information bit "1") to the NW via the source satellite (e.g., first satellite SAT#1) or via the target satellite (e.g., second satellite SAT#2).

In some implementations, in a case that the UE fails to decode the indication#2, the UE may transmit a NACK (e.g., HARQ-ACK information bit "0") to the NW or to the NTN serving cell provided via the source satellite (e.g., first satellite SAT#1).

In a case that the indication#2 is a MAC CE, in some implementations, if the UE decodes the indication#2 successfully and transmits the HARQ-ACK information in slot $n$ corresponding to the PDSCH carrying the indication#2, the UE may apply the information (e.g., indicated by the indication#1) or the configuration (e.g., provided in the pre-configuration), starting from the first slot that is after $n + 3N_{\text{slot}}^{\text{subframe},\mu} + \frac{2^{\mu}}{2^{\mu_{Kmac}}} \cdot k_{mac}$, where $\mu$ may be the SCS configuration for the PUCCH, $\mu_{Kmac}$ may be the SCS configuration for $k_{mac}$ with a value 0 for FR1 or with a value 2 or 3 for FR2, and $k_{mac}$ may be provided by K-Mac (e.g., K_mac as described above) or $k_{mac}$ may be equal to 0 if K-Mac is not provided. In such a case, $N_{\text{slot}}^{\text{subframe},0}$ is equal to 1, $N_{\text{slot}}^{\text{subframe},1}$ is equal to 2, $N_{\text{slot}}^{\text{subframe},2}$ is equal to 4, $N_{\text{slot}}^{\text{subframe},3}$ is equal to 8, and $N_{\text{slot}}^{\text{subframe},4}$ is equal to 16.

Referring back to FIG. 5, after action 509, the UE may start being served by the NTN serving cell provided via the target satellite (e.g., second satellite SAT#2); and in action 509, the NTN serving cell may stop serving the current coverage area via the source satellite (e.g., first satellite SAT#1) and may switch to the next coverage area.

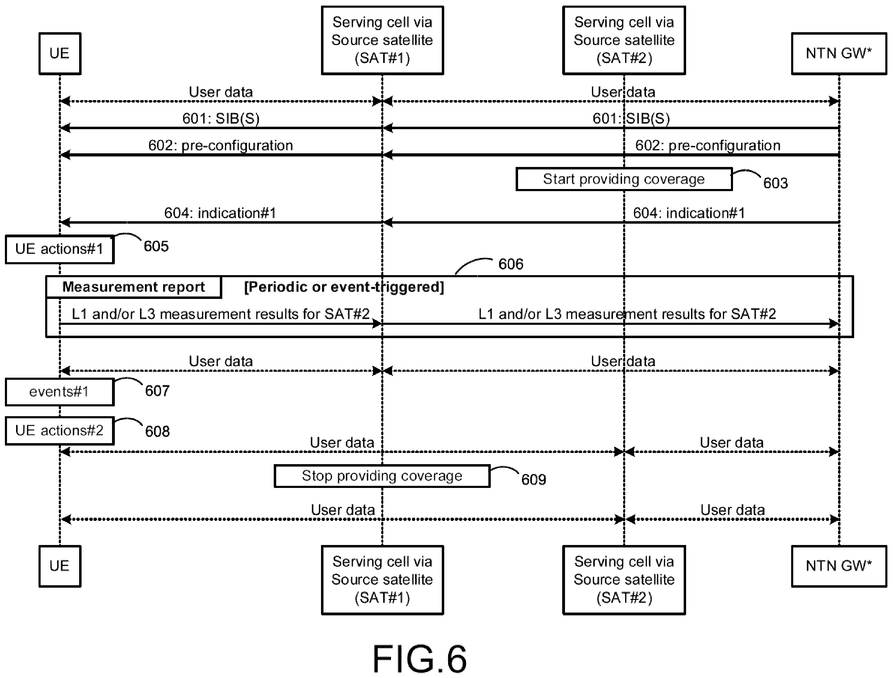

FIG. 6 is a signaling diagram illustrating a time-based network-controlled satellite switching procedure, according to an example implementation of the present disclosure.

FIG. 6 illustrates a time-based NW-controlled satellite switching procedure with PCI unchanged, in an NTN scenario. The satellite switching may be, for example, a soft or a hard satellite switching. In some implementations, certain "messages" shown in FIG. 6 may be optionally absent. In some implementations, the procedure shown in FIG. 6 may include a combination of all or part of the "messages" illustrated in FIG. 6. In some implementations, a "message" represented by a solid arrow in FIG. 6 may include any message, such as SIB(s), pre-configuration setting(s), indication#1, and L1 and/or L3 measurement results for a second (e.g., target) satellite SAT#2. In some implementations, the "User data" represented by a double-dotted arrow in FIG. 6 may signify the transfer of UE's data between the entities that the double-dotted arrow connects.

Referring to FIG. 6, in action 601, the UE may receive one or more SIBs broadcast by the NW.

In some implementations, the received SIB(s) may include a SIB 19, SIB2, SIB3, and/or SIB4.

In some implementations, the received SIB(s) may include satellite assistance information for the serving satellite/NTN serving cell. The satellite assistance information may include one or more of an *NTN-Config,* time information, a reference location, a distance threshold, one or more satellite IDs, and a list of neighboring NTN cells.

In some implementations, the *NTN-Config* may be an RRC IE. The *NTN-Config* may be associated with the cell/gNB broadcasting the SIB(s). The *NTN-Config* may include one or more of the following:

(1) Ephemeris of the source satellite, provided by the higher-layer parameter *ephemerisInfo*;

(2) Common TA parameters of the source satellite, provided by the higher-layer parameter *ta-Info*;

(3) Validity duration for both the ephemeris and the common TA parameters of the source satellite, provided by the higher-layer parameter *ntn-UlSyncValidityDuration*;

(4) Epoch time for both the ephemeris and the common TA parameters of the source satellite, provided by the higher-layer parameter *epochTime;* and/or

(5) Cell-specific K_offset and K_mac, provided by higher layer parameters *cellSpecificKoffset* and *Kmac,* respectively.

In some implementations, the time information may indicate when the cell provided via the NTN quasi-fixed system should stop serving its current coverage area, provided by *t-Service.*

In some implementations, the reference location may include a reference location of the serving cell provided via the NTN quasi-earth-fixed system. The reference location may be used for location-based measurement initiation in the RRC_IDLE and RRC_INACTIVE states.

In some implementations, the distance threshold may indicate the distance of the UE from the serving cell reference location. The threshold may be used for location-based measurement initiation in the RRC_IDLE and RRC_INACTIVE states.

In some implementations, each satellite ID may indicate, or be associated with, a set of satellite assistance information. The satellite assistance information may be included in the *NTN-Config.*

In some implementations, the list of neighboring NTN cells may include the *NTN-Config* IE and/or the carrier frequency (e.g., provided by a higher-layer parameter *carrierFreq*) and/or the PCI (e.g., provided by a higher-layer parameter *physCellId*) and/or the satellite ID.

In some implementations, the number of neighboring cells in the list may be up to 4.

In some implementations, the number of neighboring cells in the list may exceed 4.

In some implementations, the higher-layer parameters of one or more neighboring cells may be set to the same value as the PCI of the NTN serving cell provided via the source satellite (e.g., the first satellite SAT#1).

In some implementations, the *physCellId* of one or more neighboring cells may be absent, indicating that the PCI(s) is the same as the NTN serving cell provided via the source satellite (e.g., the first satellite SAT#1).

Referring back to FIG. 6, in action 602, the UE may receive one or more pre-configurations from the NW.

In some implementations, the received pre-configuration(s) may be carried in an RRC message, such as an *RRCReconfiguration* message.

In some implementations, the received pre-configuration(s) may include one or more RRC parameters/IEs.

In some implementations, if a pre-configuration is received by the UE, the received pre-configuration may be associated with the target satellite/target NTN cell.

In some implementations, if multiple pre-configurations are received by the UE, each pre-configuration may be associated with a different target satellite/target NTN cell.

In some implementations, each pre-configuration may include one or more of a first indication indicating a neighboring NTN cell, a satellite ID, satellite assistance information, SSB indices of multiple SSBs, time domain information about the SSBs, one or more measurement configurations, one or more SMTC configurations, information about the UL power control for PUSCH and/or PUCCH and/or Sounding Reference Signal (SRS), an UL bandwidth part (BWP) ID, a DL BWP ID, a second indication indicating whether the UE performs an RA procedure, a third indication indicating an N_TA value; configuration(s) including physical random access channel (PRACH) resource(s); a timestamp; and/or a duration of a first timer.

In some implementations, the first indication may include an indication indicating a neighboring NTN cell via the target satellite (e.g., the second satellite SAT#2) from the list of neighboring NTN cells included in a SIB (e.g., if the target satellite (NTN cell) is included in the list of neighboring NTN cells in the SIB).

In some implementations, the SIB may be a SIB 19, SIB2, SIB3, or SIB4.

In some implementations, the first indication may be an integer representing the order of an entry in the list of neighboring NTN cells included in the SIB. For example, if the first indication is "1", the satellite assistance information (e.g., *NTN-Config)* of the target satellite (e.g., the second satellite SAT#2) may be the *NTN-Config* of the first neighboring NTN cell in the list; if the indication is "2", the satellite assistance information (e.g., *NTN-Config)* of the target satellite may be the *NTN-Config* of the second neighboring NTN cell in the list, and so on.

In some implementations, the UE may use the satellite assistance information (e.g., *NTN-Config)* associated with the satellite ID, included in the pre-configuration, during the satellite switching procedure.

In some implementations, the satellite assistance information included in the pre-configuration may include satellite assistance information of the NTN serving cell provided via the target satellite (e.g., the second satellite SAT#2).

In some implementations, the satellite assistance information included in the pre-configuration may include one or more of the following:

(1) *NTN-Config* RRC IE of the target satellite (e.g., the second satellite SAT#2);

(2) The satellite ID of the target satellite (e.g., the second satellite SAT#2);

(3) Time information indicating when the cell provided via the NTN quasi-fixed system should stop serving its current coverage area, provided by *t-Service;*

(4) A reference location of the serving cell provided via the NTN quasi-earth-fixed system. The reference location may be used for location-based measurement initiation in the RRC_IDLE and RRC_INACTIVE states; and/or

(5) A distance threshold indicating the distance of the UE from the serving cell reference location. The threshold may be used for location-based measurement initiation in the RRC_IDLE and RRC_INACTIVE states.

In some implementations, the SSB indices included in the pre-configuration may be SSB indices of the SSBs transmitted from the target satellite (e.g., the second satellite SAT#2).

In some implementations, the SSB indices of the SSBs transmitted by the target satellite (e.g., second satellite SAT#2) may be represented by a bitmap.

In some implementations, the size of the bitmap (the number of bits) may be the maximum number of SSBs per half frame (e.g., 4, 8, or 64).

In some implementations, the bitmap may indicate the time domain positions of the SSBs transmitted by the target satellite (e.g., the second satellite SAT#2) in a half frame.

In some implementations, the first/leftmost bit of such a bitmap may correspond to an SSB index 0, the second bit may correspond to an SSB index 1, and so on.

In some implementations, a value of 0 in the bitmap may indicate that the corresponding SSB is not transmitted, while a value of 1 may indicate that the corresponding SSB is transmitted.

In some implementations, the size of (e.g., the number of bits in) the bitmap may be 8 bits.

In some implementations, when the maximum number of SSBs per half frame is 4, only the 4 leftmost bits in the bitmap may be valid, and the UE may ignore the 4 rightmost bits in the bitmap.

In some implementations, when the maximum number of SSBs per half frame is 8, all 8 bits in the bitmap may be valid.

In some implementations, the first/leftmost bit may correspond to an SSB index 0, the second bit may correspond to an SSB index 1, and so on.

In some implementations, when the maximum number of SSBs per half frame is 64, all 8 bits in the bitmap may be valid.

In some implementations, the first/leftmost bit may correspond to the first SSB index in each group (e.g., the SSB index 0, 8, and so on); the second bit may correspond to the second SSB index in each group (e.g., the SSB index 1, 9, and so on), and so on. Each SSB group may be determined as follows: group#1 may include SSB indices from 0 to 7, group#2 may include SSB indices from 8 to 15, and so on.

In some implementations, a value of 0 in the bitmap may indicate that the corresponding SSB(s) is/are not transmitted, while a value of 1 may indicate that the corresponding SSB(s) is/are transmitted.

In some implementations, if an SSB index indicated as transmitted from the NTN serving cell (e.g., via the source satellite (e.g., the first satellite SAT#1)) by the NW (e.g., via RRC parameter *ssb-PositionsInBurst)* is also indicated as transmitted from the target satellite (e.g., the second satellite SAT#2) by the NW via the bitmap, the UE may assume that the corresponding SSB is transmitted from the target satellite (e.g., the second satellite SAT#2). In such a case, the bitmap may override the RRC parameter *ssb-PositionsInBurst* when both indicate that an SSB with a particular index is transmitted.

In some implementations, if an SSB index indicated as transmitted from the NTN serving cell (e.g., via the source satellite (e.g., the first satellite SAT#1)) by the NW (e.g., via RRC parameter *ssb-PositionsInBurst*) is also indicated as transmitted from the target satellite (e.g., the second satellite SAT#2) by the NW via the bitmap, the UE may assume that the corresponding SSB is transmitted from the NTN serving cell provided via the source satellite (e.g., the first satellite SAT#1). In such a case, the RRC parameter *ssb-PositionsInBurst* may override the bitmap when both indicate that an SSB with a particular index is transmitted.

In some implementations, the UE may assume that the bitmap and the RRC parameter *ssb-PositionsInBurst* do not simultaneously indicate a value of 1 (e.g., SSB is transmitted) for the same SSB index/indices.

In some implementations, the time domain information included in the pre-configuration may be time domain information about the SSBs transmitted from the target satellite (e.g., the second satellite SAT#2).

In some implementations, the UE may assume that the SSBs received in the time duration indicated by the time domain information are transmitted from the target satellite (e.g., the second satellite SAT#2). When the UE is required/configured to perform measurements on the SSBs of the target satellite (e.g., the second satellite SAT#2), the UE may measure the SSBs received during the duration indicated by the time domain information.

In some implementations, the time domain information may be one or a combination of the following:

(1) One or more hyper System Frame Numbers (SFNs);

(2) One or more SFNs;

(3) One or more subframe numbers;

(4) One or more slot numbers; and/or

(5) One or more SSB indices.

In some implementations, each of the one or more measurement configurations may include one or more measurement objects, which may include the time/frequency location and SCS of the SSB of the NTN serving cell provided via the target satellite (e.g., the second satellite SAT#2).

In some implementations, the one or more measurement configurations may include one or more SMTC configurations. The UE may perform the measurements on the SSBs received from the target satellite (e.g., the second satellite SAT#2) during the SMTC window.

In some implementations, the one or more measurement configurations may include one or more CSI report configurations.

In some implementations, the CSI report(s) may be configured as periodic, semi-persistent on a PUCCH, semi-persistent on a PUSCH, or aperiodic.

In some implementations, the report quantity configuration of the CSI report(s) may be configured as "ssb-Index-RSRP", which may mean that the UE may report the CSI measured RSRP over one or more SSB indices.

In some implementations, the one or more SMTC configurations included in the pre-configuration may be for measurement(s) on the SSB of the NTN serving cell provided via the target satellite (e.g., the second satellite SAT#2).

In some implementations, the information about the UL power control for PUSCH and/or PUCCH and/or SRS may include one or more of the following:

(1) One or more p0-alpha set(s) (ID);

(2) Path loss reference signal (PL-RS) ID, e.g., *pathlossReferenceIndex*, which may indicate a reference signal that may be used by the UE to estimate the path-loss and to calculate the power for UL transmission(s);

(3) Nominal PUSCH power configuration(s), e.g., *preambleReceivedTargetPower, p0-NominalWithoutGrant, p0-NominalWithGrant, p0-PUCCH-Value,* which may be used by the UE to calculate the power of UL transmission(s).

(4) An index of a PUSCH power control adjustment state, which may be used by the UE to perform closed-loop power control and calculate the power of UL transmission(s).

In some implementations, the UL BWP ID may indicate the first active BWP ID after a satellite switch or after the events#1 is/are met.

In some implementations, the DL BWP ID may indicate the first active BWP ID after a satellite switch or after the events#1 is/are met.

In some implementations, the second indication may be an indication of whether the UE may (be configured/authorized to) perform a (2-step/4-step) RA procedure upon events#1 is/are met, the ENUMERATED set to "{enabled}" or the ENUMERATED set to "{enabled, disabled}".

In some implementations, the third indication may be an indication of the N_TA value that the UE may use to determine the transmission time of the preamble(s), which is part of the RA procedure upon events#1 is/are met.

In some implementations, the third indication may instruct the UE to use the N_TA value equal to 0 or to use the N_TA value equal to the current stored N_TA value.

In some implementations, the third indication may provide the UE with a specific N_TA value.

In some implementations, the configuration of a PRACH resource may include one or more of a preamble index, a time-domain resource, and a frequency-domain resource.

In some implementations, the timestamp may indicate the time when the UE switches from the source satellite (e.g., the first satellite SAT#1) to the target satellite (e.g., the second satellite SAT#2). For example, the timestamp may indicate the time at which the coverage area of the serving cell provided via the target satellite (e.g., the second satellite SAT#2) has started covering the coverage area of the serving cell provided via the source satellite (e.g., the first satellite SAT#1).

In some implementations, the timestamp may indicate a time in multiples of 10 ms after 00:00:00 on January 1, 1900 (Gregorian calendar). The exact switching time may be between the time indicated by the value of the timestamp minus 1 and the time indicated by the value of the timestamp.

In some implementations, the timestamp may indicate a time using a combination of a hyper SFN, an SFN, and/or a subframe number.

In some implementations, the duration of the first timer (e.g., denoted as timer#1) may indicate an initial value of the first timer or a length of the first timer.

In some implementations, the first timer may be a timer maintained by an RRC entity or a MAC entity.

In some implementations, the unit of the duration may be in slot(s), radio frame(s), second(s), millisecond(s), or subframe(s).

Referring back to FIG. 6, in action 603, the coverage area of the serving cell provided via the target satellite (e.g., the second satellite SAT#2) may start covering the coverage area of the serving cell provided via the source satellite (e.g., the first satellite SAT#1); in action 604, the UE may receive one or more indication#1s from the NW.

In some implementations, the one or more indication#1s may indicate that an NTN serving cell provided via the target satellite (e.g., the second satellite SAT#2) starts covering the coverage area of the serving cell provided via the source satellite (e.g., the first satellite SAT#1).

In some implementations, the one or more indication#1s may be transmitted via the source satellite (e.g., first satellite SAT#1).

In some implementations, one of the one or more indication#1s may be a MAC CE.

In some implementations, the UE may transmit a HARQ-ACK information bit in response to the decoding result of the PDSCH carrying the MAC CE (e.g., the indication#1).

In some implementations, one of the one or more indication#1s may be group-common DCI. The group-common DCI may be DCI with CRC scrambled by a group-common RNTI (e.g., G-RNTI) or an RNTI corresponding to the NTN.

In some implementations, one of the one of more indication#1s may be UE-specific DCI with CRC scrambled by a UE-specific RNTI, e.g., C-RNTI, CS-RNTI, or MCS-RNTI.

In some implementations, the DCI may schedule a PDSCH. The UE may transmit a HARQ-ACK information bit in response to receiving the PDSCH in a slot indicated by a field (e.g., PDSCH-to-HARQ_feedback timing indicator field) included in the DCI.

In some implementations, in a case that the UE transmits a (e.g., RRC/HARQ/ARQ) NACK message, in response to the scheduled PDSCH reception, to the NW, the UE may apply the information indicated by the indication#1.

In some implementations, regardless of whether the UE transmits a (e.g., RRC/HARQ/ARQ) ACK or a NACK, in response to the scheduled PDSCH reception, to the NW, the UE may apply the information indicated by the indication#1.

In some implementations, the DCI may be DCI without a DL assignment. In other words, the DCI may not schedule the PDSCH reception(s). In some implementations, the NW may set one or more fields included in the DCI to a specific value. In some implementations, the NW may scramble the CRC of the DCI with a specific RNTI (e.g., C-RNTI, CS-RNTI, MCS-RNTI, or other RNTI). If the UE detects that the one or more fields included in the DCI are set to the specific value and/or if the UE finds that the CRC of the DCI is scrambled by the specific RNTI, the UE may recognize that the DCI does not schedule any PDSCH reception(s).

In some implementations, if the UE transmits HARQ information, in response to the DCI reception, to the NW, the UE may apply the information indicated by the indication#1. It should be noted that, the HARQ information may be an ACK-only, a NACK-only or ACK/NACK information. The ACK-only means that the UE only transmits the ACK. The NACK-only means that the UE only transmits the NACK. The ACK/NACK means that the UE may transmit either the ACK or the NACK.

In some implementations, regardless of whether the UE transmits an ACK or a NACK, in response to the DCI reception, to the NW, the UE may apply the information indicated by the indication#1.

In some implementations, the DCI may include a field to indicate which pre-configuration a UE should apply. The field may indicate a satellite ID or an indication of a neighboring NTN cell.

In some implementations, one of the one or more indication#1s may be a SIB or part of a SIB. The SIB may be received by the UE via broadcasting or UE-specific dedicated control signaling.

In some implementations, the SIB may be SIB 19, SIB 1, SIB2, SIB3 or SIB4.

In some implementations, the UE may be requested by the NW to re-acquire the SIB.

In some implementations, if the indication#1 is present in the SIB, a UE in the RRC_IDLE state may perform an initial access and/or an initiate RRC connection procedure and/or an RA procedure using the information of the target satellite (e.g., second satellite SAT#2) indicated by the indication#1.

In some implementations, the UE may use the satellite assistance information indicated in the indication#1 to perform the DL synchronization and the UL transmission. Specifically, the UE may use the common TA parameters and the ephemeris of the target satellite (e.g., second satellite SAT#2) to determine the TA value when performing the UL transmissions during the RA procedure.

In some implementations, the UE may use the SSBs with the SSB indices indicated by the indication#1 to determine the transmission occasion(s) of the RA preambles (e.g., the PRACH occasion(s)) during the RA procedure.

In some implementations, the one or more indication#1s may include one or more of a measurement object ID, an indication of a neighboring NTN cell via the target satellite, SSB indices, frequency location(s), a bit indicating that the target satellite is present, a DL BWP ID, a UL BWP ID, a timestamp; and a duration of the first timer (e.g., denoted as timer#1).

In some implementations, the measurement object ID may indicate that the measurement object is configured in the pre-configuration.

In some implementations, the indication may indicate a neighboring NTN cell via the target satellite (e.g., second satellite SAT#2) from the list of neighboring NTN cells included in the SIB 19.

In a case that the GSCNs are the same, the one or more indication#1s may include the SSB indices transmitted from the target satellite (e.g., second satellite SAT#2).

In a case that the GSCNs are different, the one or more indication#1s may include the frequency location (e.g., ARFCN) of the SSBs transmitted from the target satellite (e.g., second satellite SAT#2).

In a case that the indication#1 include DCI, the indication#1 may include a bit indicating that the target satellite (e.g., second satellite SAT#2) is present. In some implementations, the DCI may include a 1-bit field to indicate that the target satellite (e.g., second satellite SAT#2) is present. The DCI may be with or without a DL assignment.

In some implementations, the DL BWP ID may indicate the first active DL BWP after a satellite switch or after the events#1 is/are met.

In some implementations, the UL BWP ID may indicate the first active UL BWP after a satellite switch or after the events#1 is/are met.

In some implementations, the timestamp may indicate when the UE switches from the source satellite (e.g., first satellite SAT#1) to the target satellite (e.g., second satellite SAT#2). For example, the timestamp may indicate the time at which the coverage area of the serving cell provided via the target satellite (e.g., the second satellite SAT#2) has started covering the coverage area of the serving cell provided via the source satellite (e.g., the first satellite SAT#1).

In some implementations, the timestamp may indicate a time in multiples of 10 ms after 00:00:00 on January 1, 1900 (Gregorian calendar). The exact time may be between the time indicated by the value of the timestamp minus 1 and the time indicated by the value of the timestamp.

In some implementations, the timestamp may indicate a time using a combination of a hyper SFN, an SFN, and/or a subframe number.

In some implementations, the duration of the first timer (e.g., timer#1) may indicate an initial value of the first timer or a length of the first timer.

In some implementations, the first timer may be maintained by an RRC entity or a MAC entity.

In some implementations, the first timer may be in the unit of slot(s), millisecond(s), or subframe(s).

Referring back to FIG. 6, in action 605, the UE may perform UE actions#1 upon the reception of the indication#1.

In some implementations, the UE actions#1 may include one or more of the following:

(1) in a case that the indication#1 includes measurement configuration ID(s) (e.g., *MeasID*(s)), activating the indicated measurement configuration(s);

(2) computing the TA value based on the common TA parameters and the ephemeris of the NTN serving cell provided via the target satellite (e.g., second satellite SAT#2);

(3) performing a UL frequency synchronization based on the satellite assistance information (e.g., *NTN-Config*) of the target satellite (e.g., second satellite SAT#2) (e.g., the satellite assistance information associated with the satellite ID or the neighboring NTN cell indicated by the pre-configuration or the indication#1);

(4) performing a DL sync based on the SSBs with SSB indices belonging to the target satellite (e.g., second satellite SAT#2) (e.g., the GSCN may be the same);

(5) performing time and frequency synchronization with the target satellite (e.g., second satellite SAT#2) according to the information about the SSBs of the target satellite (e.g., second satellite SAT#2) or the gNB#2 carried in the pre-configuration (e.g., at the time indicated by the timestamp carried in the pre-configuration);

(6) switching to the target satellite (e.g., second satellite SAT#2) at the time indicated by the timestamp carried in the pre-configuration;

(7) starting or restarting the first timer (e.g., timer#1) with the initial value, provided in the pre-configuration or indicated in the one or more indication#1s, and decreasing the first timer as time goes by;

(8) starting or restarting the first timer (e.g., timer#1) with a value 0 and increase the first timer as time goes by; and/or

(9) in a case that the indication#1 transmitted via the SIB, and a bit, or one or more fields, in the indication#1 indicates that the target satellite (e.g., second satellite SAT#2) is present, performing an L1/L3 measurement on the SSBs transmitted by the target satellite (e.g., second satellite SAT#2) or belonging to the target satellite (e.g., second satellite SAT#2), where the SSB indices of the SSBs may be indicated in a SIB (e.g., SIB 19, SIB2, SIB3, SIB4), or may be provided/configured in the pre-configuration.

In some implementations, the first timer may be started by the UE's RRC entity.

In some implementations, the first timer may be started by the UE's MAC entity.

In some implementations, when there is only one MAC entity within the UE, the only MAC entity may start the first timer.

In some implementations, when there are two MAC entities within the UE, one of the two MAC entities that is associated with the MCG may start the first timer.

Referring back to FIG. 6, in action 606, the UE may transmit/send/report the measurement result(s)/report(s) of the serving cell provided via the target satellite (e.g., second satellite SAT#2) to the NW on the serving cell provided via the source satellite (e.g., first satellite SAT#1) (e.g., via a report configuration in the pre-configuration along with the measurement configuration).

In some implementations, the UE may additionally be configured to perform an L1 or L3 measurement on the serving cell provided via the source satellite (e.g., first satellite SAT#1). The measured signal may include the SSBs received from the source satellite (e.g., first satellite SAT#1).

In some implementations, the measurement result(s)/report(s) may be the result(s) of an L1 measurement (e.g., the L1 measurement results/reports).

In some implementations, the L1 measurement result(s)/report(s) may be a type of UCI. For example, the L1 measurement result(s)/report(s) may include the CSI report(s).

In some implementations, the L1 measurement result/report may be transmitted on the PUCCH or the PUSCH, depending on whether the measurement result/report is a periodic, semi-persistent, or aperiodic CSI report.

In some implementations, the L1 measurement and/or the L1 measurement result/report may be triggered/activated by the indication#1 or upon a successful reception of the indication#1.

In some implementations, in a case that the L1 measurement/CSI report is configured as "semi-persistent", the L1/measurement/CSI report may be activated by the indication#1. In such a case, the UL grant (e.g., for the report on the PUSCH) or the PUCCH resource (for the report on the PUCCH) may be indicated by the indication#1.

In some implementations, the transmission of the L1 measurement results/reports may be triggered by one or more events.

In some implementations, the L1 measurement report may include a satellite ID and/or an SSB-RSRP and/or an SSBRI.

In some implementations, the measurement result(s)/report(s) may be the result(s) of an L3 measurement. The L3 measurement may be configured via the pre-configuration(s).

In some implementations, the report type of the L3 measurement may be configured as a periodical measurement report.

In some implementations, the report type of the L3 measurement may be configured as an event-triggered measurement report.

In some implementations, the event may be one of the following: Event A1, Event A2, Event A3, Event A4, Event A5, Event A6, Event D1, CondEvent A3, CondEvent A4, CondEvent A5, CondEvent D1, and/or CondEvent T1. Definitions of the aforementioned events are as follows.

Event A1: The RSRP/RSRQ/SINR of a serving cell becomes better than an absolute threshold.

Event A2: The RSRP/RSRQ/SINR of a serving cell becomes worse than an absolute threshold.

Event A3: The RSRP/RSRQ/SINR of a neighbor cell becomes amount of offset better than the RSRP/RSRQ/SINR of the PCell/PSCell.

Event A4: The RSRP/RSRQ/SINR of a neighbor cell becomes better than an absolute threshold.

Event A5: The RSRP/RSRQ/SINR of the PCell/PSCell becomes worse than a first absolute threshold and the RSRP/RSRQ/SINR of a neighbor cell/SCell becomes better than a second absolute threshold.

Event A6: The RSRP/RSRQ/SINR of a neighbor cell becomes amount of offset better than an SCell.

Event D1: The distance between the UE and a reference location *referenceLocation1* becomes (e.g., in units of meters or kilometers) greater than a configured threshold *distanceThreshFromReference1* (e.g., also in units of meters or kilometers), and the distance between the UE and another reference location *referenceLocation2* becomes less than another configured threshold *distance ThreshFromReference2.*

CondEvent A3: The RSRP/RSRQ/SINR of a conditional reconfiguration candidate becomes amount of offset better than the RSRP/RSRQ/SINR of the PCell/PSCell.

CondEvent A4: The RSRP/RSRQ/SINR of a conditional reconfiguration candidate becomes better than an absolute threshold.

CondEvent A5: The RSRP/RSRQ/SINR of the PCell/PSCell becomes worse than an absolute threshold1 AND the RSRP/RSRQ/SINR of a conditional reconfiguration candidate becomes better than another absolute threshold2.

CondEvent D1: The distance between the UE and a reference location *referenceLocation1* of a conditional reconfiguration candidate becomes greater than a configured threshold *distanceThreshFromReference1,* and the distance between the UE and another reference location *referenceLocation2* of a conditional reconfiguration candidate becomes less than another configured threshold *distance ThreshFromReference2.*

CondEvent T1: A time measured at the UE becomes greater than a configured threshold *tl-Threshold* but is less than *tl-Threshold + duration,* where the *duration* may be configured by the NW.

In some implementations, the event may be an event different from the above events. In some implementations, the event may be "the RSRP/RSRQ/SINR of the target satellite becomes (amount of offset) better than the RSRP/RSRQ/SINR of the source satellite".

In some implementations, the event may be "the RSRP/RSRQ of the SSBs of the NTN serving cell provided via

the target satellite (e.g., second satellite SAT#2) becomes larger than the RSRP/RSRQ of the SSBs of the NTN serving cell provided via the source satellite (e.g., first satellite SAT#1)".

In some implementations, the report of the L3 measurement may include the RSRP of the SSBs received from the target satellite (e.g., second satellite SAT#2), as indicated by the pre-configuration or the indication#1.

In some implementations, the report of the L3 measurement may include the RSRQ or the SINR.

In some implementations, the L3 measurement result/report may include the RSRP of SSB(s) and a satellite ID.

In some implementations, the L3 measurement result/report may include the RSRP of SSB(s) and an indication. When the indication is present and/or is configured as to have a first value, it may indicate that this L3 measurement result/report is associated with the target satellite, which is indicated in the pre-configuration or indication#1. When the indication is absent or is configured as to have a second value, it may indicate that this L3 measurement result/report is not associated with the target satellite, which is indicated in the pre-configuration or indication#1.

Referring back to FIG. 6, in action 607, the UE may determine whether all or part of events#1 occurs; and in action 608, the UE may perform UE actions#2 in a case that all or part of the events#1 occurs.

In some implementations, the events#1 may include one or more of the following:

(1) the current time is the same time as the timestamp provided in the pre-configuration or indicated by the indication#1;
(2) expiry of the first timer (e.g., timer#1);
(3) the value the of the first timer (e.g., timer#1) reaches the value indicated by the duration of the first timer, where the duration of the timer may be provided in the pre-configuration or indicated by the indication#1;
(4) the event that triggers the L3 measurement report for the target satellite (e.g., second satellite SAT#2);
(5) the event that triggers the L1 measurement report for the target satellite (e.g., second satellite SAT#2); and
(6) the RSRP/RSRQ of the SSBs of the NTN serving cell provided via the target satellite (e.g., second satellite SAT#2) becomes larger than the RSRP/RSRQ of the SSBs of the NTN serving cell provided via the source satellite (e.g., first satellite SAT#1).

In some implementations, the UE actions#2 may include one or more of the following:

(1) applying the beam indication (e.g., TCI state(s)) provided by the pre-configuration for next UL transmissions and/or DL receptions;
(2) applying the information related to UL power control provided by the pre-configuration for next UL transmissions;
(3) switching the active DL BWP based on the DL BWP ID provided by the pre-configuration;
(4) switching the active UL BWP based on the UL BWP ID provided by the pre-configuration;
(5) re-acquiring system information (e.g., SIB1 and/or other SIBs such as SIB 19), for example, regardless of whether the corresponding *valueTag* has changed or not;
(6) performing a RACH-based action: in a case that the indication#1 and/or the pre-configuration indicates to the UE to perform an RA procedure, performing the RA procedure and transmitting a preamble with N_TA equal to 0, a common TA equal to a value calculated from the common TA parameters of the NTN serving cell of the target satellite (e.g., second satellite SAT#2), and a UE-specific TA equal to a value calculated from the ephemeris of the NTN serving cell of the target satellite (e.g., second satellite SAT#2); and
(7) in a case that the indication#1 or the pre-configuration indicates to the UE to perform an RA procedure, performing the RA procedure and transmitting a preamble with N_TA equal to a value indicated by the indication#1 or the pre-configuration.

In some implementations, when the pre-configuration provides a preamble index, the UE may use the provided preamble index for the preamble transmission.

In some implementations, the time-domain and/or frequency-domain resource for the PRACH transmission may be provided by the pre-configuration.

Referring back to FIG. 6, after action 608, the UE may start being served by the NTN serving cell provided via the target satellite (e.g., second satellite SAT#2); and in action 609, the NTN serving cell provided via the source satellite (e.g., first satellite SAT#1) may stop serving the current coverage area via the source satellite (e.g., first satellite SAT#1) and may switch to the next coverage area.

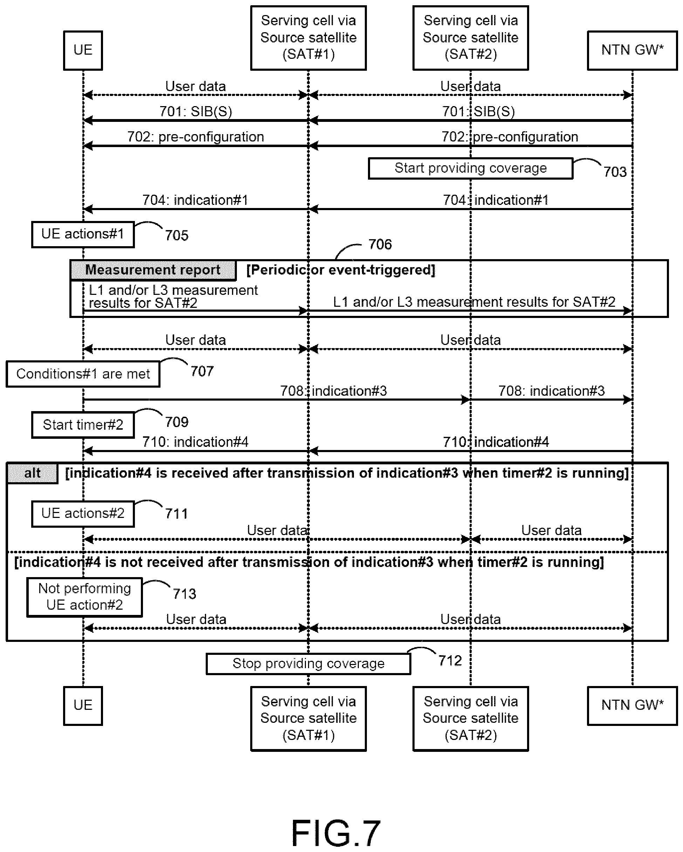

FIG. 7 is a signaling diagram illustrating a UE-initiated satellite switching procedure, according to an example implementation of the present disclosure.

Referring to FIG. 7 illustrates a UE-initiated satellite switching procedure with PCI unchanged, in an NTN scenario. The satellite switching may be, for example, a soft or a hard satellite switching. In some implementations, certain "messages" shown in FIG. 7 may be optionally absent. In some implementations, the procedure shown in FIG. 7 may include a combination of all or part of the "messages" illustrated in FIG. 7. In some implementations, a "message" represented by a solid arrow in FIG. 7 may include any message, such as SIB(s), pre-configuration setting(s), indication#1, L1 and/or L3 measurement results for a second (e.g., target) satellite SAT#2, and indication#3. In some implementations, the "User data" represented by a double-dotted arrow in FIG. 7 may signify the transfer of UE's data between the entities that the double-dotted arrow connects.

Referring to FIG. 7, in action 701, the UE may receive one or more SIBs broadcast by the NW.

In some implementations, the received SIB(s) may include a SIB19, SIB2, SIB3, and/or SIB4.

In some implementations, the received SIB(s) may include satellite assistance information for the serving satellite/NTN serving cell. The satellite assistance information may include one or more of an *NTN-Config,* time information, a reference location, a distance threshold, one or more satellite IDs, and a list of neighboring NTN cells.

In some implementations, the *NTN-Config* may be an RRC IE. The *NTN-Config* may be associated with the cell/gNB broadcasting the SIB(s). The *NTN-Config* may include one or more of the following:

(1) Ephemeris of the source satellite, provided by the higher-layer parameter *ephemerisInfo*;
(2) Common TA parameters of the source satellite, provided by the higher-layer parameter *ta-Info*;
(3) Validity duration for both the ephemeris and the common TA parameters of the source satellite, provided by the higher-layer parameter *ntn-UlSyncValidityDuration*;
(4) Epoch time for both the ephemeris and the common TA parameters of the source satellite, provided by the higher-layer parameter *epochTime;* and/or
(5) Cell-specific K_offset and K_mac, provided by higher layer parameters *cellSpecificKoffset* and *Kmac,* respectively.

In some implementations, the time information may indicate when the cell provided via the NTN quasi-fixed system should stop serving its current coverage area, provided by t-*Service.*

In some implementations, the reference location may include a reference location of the serving cell provided via the NTN quasi-earth-fixed system. The reference location may be used for location-based measurement initiation in the RRC_IDLE and RRC_INACTIVE states.

In some implementations, the distance threshold may indicate the distance of the UE from the serving cell reference location. The threshold may be used for location-based measurement initiation in the RRC_IDLE and RRC_INACTIVE states.

In some implementations, each satellite ID may indicate, or be associated with, a set of satellite assistance information. The satellite assistance information may be included in the *NTN-Config.*

In some implementations, the list of neighboring NTN cells may include the *NTN-Config* IE and/or the carrier frequency (e.g., provided by a higher-layer parameter *carrierFreq*) and/or the PCI (e.g., provided by a higher-layer parameter *physCellId*) and/or the satellite ID.

In some implementations, the number of neighboring cells in the list may be up to 4.

In some implementations, the number of neighboring cells in the list may exceed 4.

In some implementations, the higher-layer parameters of one or more neighboring cells may be set to the same value as the PCI of the NTN serving cell provided via the source satellite (e.g., the first satellite SAT#1).

In some implementations, the *physCellId* of one or more neighboring cells may be absent, indicating that the PCI(s) is the same as the NTN serving cell provided via the source satellite (e.g., the first satellite SAT#1).

Referring back to FIG. 7, in action 702, the UE may receive one or more pre-configurations from the NW.

In some implementations, the received pre-configuration(s) may be carried in an RRC message, such as an *RRCReconfiguration* message.

In some implementations, the received pre-configuration(s) may include one or more RRC parameters/IEs.

In some implementations, if multiple pre-configurations are received by the UE, each pre-configuration may be associated with a different target satellite/target NTN cell.

In some implementations, each pre-configuration may include one or more of a first indication indicating a neighboring NTN cell, a satellite ID, satellite assistance information, SSB indices of multiple SSBs, time domain information about the SSBs, one or more measurement configurations, one or more SMTC configurations, information about the UL power control for PUSCH and/or PUCCH and/or SRS, a UL BWP ID, a DL BWP ID, a second indication indicating whether the UE performs an RA procedure, a third indication of an N_TA value; configuration(s) including PRACH resource(s); a timestamp; a duration of a second timer; a fourth indication indicating an NTN serving cell/satellite; a duration of a prohibit timer; and/or a parameter.

In some implementations, the first indication may include an indication indicating a neighboring NTN cell via the target satellite (e.g., the second satellite SAT#2) from the list of neighboring NTN cells included in a SIB (e.g., if the target satellite (NTN cell) is included in the list of neighboring NTN cells in the SIB).

In some implementations, the SIB may be a SIB 19, SIB2, SIB3, or SIB4.

In some implementations, the first indication may be an integer representing the order of an entry in the list of neighboring NTN cells included in the SIB. For example, if the first indication is "1", the satellite assistance information (e.g., *NTN-Config)* of the target satellite (e.g., the second satellite SAT#2) may be the *NTN-Config* of the first neighboring NTN cell in the list; if the indication is "2", the satellite assistance information (e.g., *NTN-Config)* of the target satellite may be the *NTN-Config* of the second neighboring NTN cell in the list, and so on.

In some implementations, the UE may use the satellite assistance information (e.g., *NTN-Config)* associated with the satellite ID, included in the pre-configuration, during the satellite switching procedure.

In some implementations, the satellite assistance information included in the pre-configuration may include satellite assistance information of the NTN serving cell provided via the target satellite (e.g., the second satellite SAT#2).

In some implementations, the satellite assistance information included in the pre-configuration may include one or more of the following:

(1) *NTN-Config* RRC IE of the target satellite (e.g., the second satellite SAT#2);

(2) The satellite ID of the target satellite (e.g., the second satellite SAT#2);

(3) Time information indicating when the cell provided via the NTN quasi-fixed system should stop serving its current coverage area, provided by *t-Service;*

(4) A reference location of the serving cell provided via the NTN quasi-earth-fixed system. The reference location may be used for location-based measurement initiation in the RRC_IDLE and RRC_INACTIVE states; and/or

(5) A distance threshold indicating the distance of the UE from the serving cell reference location. The threshold may be used for location-based measurement initiation in the RRC_IDLE and RRC INACTIVE states.

In some implementations, the SSB indices included in the pre-configuration may be SSB indices of the SSBs transmitted from the target satellite (e.g., the second satellite SAT#2).

In some implementations, the SSB indices of the SSBs transmitted by the target satellite (e.g., second satellite SAT#2) may be represented by a bitmap.

In some implementations, the size of the bitmap (the number of bits) may be the maximum number of SSBs per half frame (e.g., 4, 8, or 64).

In some implementations, the bitmap may indicate the time domain positions of the SSBs transmitted by the target satellite (e.g., the second satellite SAT#2) in a half frame.

In some implementations, the first/leftmost bit of such a bitmap may correspond to an SSB index 0, the second bit may correspond to an SSB index 1, and so on.

In some implementations, a value of 0 in the bitmap may indicate that the corresponding SSB is not transmitted, while a value of 1 may indicate that the corresponding SSB is transmitted.

In some implementations, the size of (e.g., the number of bits in) the bitmap may be 8 bits.

In some implementations, when the maximum number of SSBs per half frame is 4, only the 4 leftmost bits in the bitmap may be valid, and the UE may ignore the 4 rightmost bits in the bitmap.

In some implementations, when the maximum number of SSBs per half frame is 8, all 8 bits in the bitmap may be valid.

In some implementations, the first/leftmost bit may correspond to an SSB index 0, the second bit may correspond to an SSB index 1, and so on.

In some implementations, when the maximum number of SSBs per half frame is 64, all 8 bits in the bitmap may be valid.

In some implementations, the first/leftmost bit may correspond to the first SSB index in each group (e.g., the SSB index 0, 8, and so on); the second bit may correspond to the second SSB index in each group (e.g., the SSB index 1, 9, and so on), and so on. Each SSB group may be determined as follows: group#1 may include SSB indices from 0 to 7, group#2 may include SSB indices from 8 to 15, and so on.

In some implementations, a value of 0 in the bitmap may indicate that the corresponding SSB(s) is/are not transmitted, while a value of 1 may indicate that the corresponding SSB(s) is/are transmitted.

In some implementations, if an SSB index indicated as transmitted from the NTN serving cell (e.g., via the source satellite (e.g., the first satellite SAT#1)) by the NW (e.g., via RRC parameter *ssb-PositionsInBurst*) is also indicated as transmitted from the target satellite (e.g., the second satellite SAT#2) by the NW via the bitmap, the UE may assume that the corresponding SSB is transmitted from the target satellite (e.g., the second satellite SAT#2). In such a case, the bitmap may override the RRC parameter *ssb-PositionsInBurst* when both indicate that an SSB with a particular index is transmitted.

In some implementations, if an SSB index indicated as transmitted from the NTN serving cell (e.g., via the source satellite (e.g., the first satellite SAT#1)) by the NW (e.g., via RRC parameter *ssb-PositionsInBurst)* is also indicated as transmitted from the target satellite (e.g., the second satellite SAT#2) by the NW via the bitmap, the UE may assume that the corresponding SSB is transmitted from the NTN serving cell provided via the source satellite (e.g., the first satellite SAT#1). In such a case, the RRC parameter *ssb-PositionsInBurst* may override the bitmap when both indicate that an SSB with a particular index is transmitted.

In some implementations, the UE may assume that the bitmap and the RRC parameter *ssb-PositionsInBurst* do not simultaneously indicate a value of 1 (e.g., SSB is transmitted) for the same SSB index/indices.

In some implementations, the time domain information included in the pre-configuration may be time domain information about the SSBs transmitted from the target satellite (e.g., the second satellite SAT#2).

In some implementations, the UE may assume that the SSBs received in the time duration indicated by the time domain information are transmitted from the target satellite (e.g., the second satellite SAT#2). When the UE is required/configured to perform measurements on the SSBs of the target satellite (e.g., the second satellite SAT#2), the UE may measure the SSBs received during the duration indicated by the time domain information.

In some implementations, the time domain information may be one or a combination of the following:

> (1) One or more hyper SFNs;
> (2) One or more SFNs;
> (3) One or more subframe numbers;
> (4) One or more slot numbers; and
> (5) One or more SSB indices.

In some implementations, each of the one or more measurement configurations may include one or more measurement objects, which may include the time/frequency location and SCS of the SSB of the NTN serving cell provided via the target satellite (e.g., the second satellite SAT#2).

In some implementations, the one or more measurement configurations may include one or more SMTC configurations. The UE may perform the measurements on the SSBs received from the target satellite (e.g., the second satellite SAT#2) during the SMTC window.

In some implementations, the one or more measurement configurations may include one or more CSI report configurations.

In some implementations, the CSI report(s) may be configured as periodic, semi-persistent on a PUCCH, semi-persistent on a PUSCH, or aperiodic.

In some implementations, the report quantity configuration of the CSI report(s) may be configured as "ssb-Index-RSRP", which may mean that the UE may report the CSI measured RSRP over one or more SSB indices.

In some implementations, the one or more SMTC configurations included in the pre-configuration may be for measurement(s) on the SSB of the NTN serving cell provided via the target satellite (e.g., the second satellite SAT#2).

In some implementations, the information about the UL power control for PUSCH and/or PUCCH and/or SRS may include one or more of the following:

> (1) One or more p0-alpha set(s) (ID);
> (2) Path loss reference signal (PL-RS) ID, e.g., *pathlossReferenceIndex*, which may indicate a reference signal that may be used by the UE to estimate the path-loss and to calculate the power for UL transmission(s);
> (3) Nominal PUSCH power configuration(s), e.g., *preambleReceivedTargetPower, p0-NominalWithoutGrant*, *p0-NominalWithGrant, p0-PUCCH-Value*, which may be used by the UE to calculate the power of UL transmission(s).
> (4) An index of a PUSCH power control adjustment state, which may be used by the UE to perform closed-loop power control and calculate the power of UL transmission(s).

In some implementations, the UL BWP ID may indicate the first active BWP ID after a satellite switch or after the events#1 is/are met.

In some implementations, the DL BWP ID may indicate the first active BWP ID after a satellite switch or after the events#1 is/are met.

In some implementations, the second indication may be an indication of whether the UE may perform an RA procedure upon the events#1 is/are met, the ENUMERATED set to "{ enabled}" or the ENUMERATED set to "{enabled, disabled}".

In some implementations, the third indication may be an indication of the N_TA value that the UE may use to determine the transmission time of the preamble(s), which is part of the RA procedure upon the events#1 is/are met.

In some implementations, the third indication may instruct the UE to use the N_TA value equal to 0 or to use the N_TA value equal to the current stored N_TA value.

In some implementations, the third indication may provide the UE with a specific N_TA value.

In some implementations, the configuration(s) including PRACH resource(s) may include preamble index and/or dedicated time-domain and/or frequency-domain PRACH resource(s).

In some implementations, the timestamp may indicate the time when the UE switches from the source satellite (e.g., the first satellite SAT#1) to the target satellite (e.g., the second satellite SAT#2). For example, the timestamp may indicate the time at which the coverage area of the serving cell provided via the target satellite (e.g., the second satellite SAT#2) has started covering the coverage area of the serving cell provided via the source satellite (e.g., the first satellite SAT#1).

In some implementations, the timestamp may indicate a time in multiples of 10 ms after 00:00:00 on January 1, 1900 (Gregorian calendar). The exact switching time may be between the time indicated by the value of the timestamp minus 1 and the time indicated by the value of the timestamp.

In some implementations, the timestamp may indicate a time using a combination of a hyper SFN, an SFN, and/or a subframe number.

In some implementations, the duration of the second timer (e.g., denotated as timer#2) may indicate an initial value of the second timer or a length of the second timer.

In some implementations, the second timer may be a timer maintained by an RRC entity or a MAC entity.

In some implementations, the unit of the duration of the second timer may be in slot(s), radio frame(s), second(s), millisecond(s), or subframe(s).

In some implementations, the fourth indication included in the pre-configuration may be an indication indicating the NTN serving cell/satellite to which the UE may transmit the indication#3.

In some implementations, the fourth indication may be the ENUMBERATED set to {a first value, a second value}.

In some implementations, the first value of the fourth indication may indicate the UE to transmit the indication#3 to (e.g., the NTN serving cell provided via) the source satellite (e.g., first satellite SAT#1). In some implementations, the second value of the fourth indication may indicate the UE to transmit the indication#3 to (e.g., the NTN serving cell provided via) the target satellite (e.g., second satellite SAT#2). In some implementations, when the fourth indication is not provided, the UE may transmit the indication#3 to (e.g., the NTN serving cell provided via) the source satellite (e.g., first satellite SAT#1). In some implementations, when the fourth indication is not provided, the UE may transmit the indication#3 to (e.g., the NTN serving cell provided via) the target satellite (e.g., second satellite SAT#2).

In some implementations, the fourth indication may be the ENUMERATED set to {a first value}.

In some implementations, the first value of the fourth indication may indicate the UE to transmit the indication#3 to (e.g., the NTN serving cell provided via) the source satellite (e.g., first satellite SAT#1). In some implementations, the first value of the fourth indication may indicate the UE to transmit the indication#3 to (e.g., the NTN serving cell provided via) the target satellite (e.g., second satellite SAT#2). In some implementations, when the fourth indication is not provided, the UE may transmit the indication#3 to (e.g., the NTN serving cell provided via) the source satellite (e.g., first satellite SAT#1). In some implementations, when the fourth indication is not provided, the UE may transmit the indication#3 to (e.g., the NTN serving cell provided via) the target satellite (e.g., second satellite SAT#2).

In some implementations, the pre-configuration may include the duration of the prohibit timer for re-transmission of the indication#3.

In some implementations, the pre-configuration may include the parameter indicating how many times (e.g., once, twice, three times, etc.) the UE may (re-)transmit the indication#3 to the NW. The parameter may be an integer or an ENUMERATED type.

Referring back to FIG. 7, in action 703, the coverage area of the serving cell provided via the target satellite (e.g., the second satellite SAT#2) may start covering the coverage area of the serving cell provided via the source satellite (e.g., the first satellite SAT#1).

In action 704, the UE may receive one or more indication#1s from the NW.

In some implementations, the one or more indication#1s may indicate that an NTN serving cell provided via the target satellite (e.g., the second satellite SAT#2) starts covering the coverage area of the serving cell provided via the source satellite (e.g., the first satellite SAT#1).

In some implementations, the one or more indication#1s may be transmitted via the source satellite (e.g., first satellite SAT#1).

In some implementations, one of the one or more indication#1s may be a MAC CE.

In some implementations, the UE may transmit a HARQ-ACK information bit in response to the decoding result of the PDSCH carrying the MAC CE (e.g., the indication#1).

In some implementations, one of the one or more indication#1s may be group-common DCI. The group-common DCI may be DCI with CRC scrambled by a group-common RNTI (e.g., G-RNTI) or an RNTI corresponding to the NTN.

In some implementations, one of the one of more indication#1s may be UE-specific DCI with CRC scrambled by a UE-specific RNTI, e.g., C-RNTI, CS-RNTI, or MCS-RNTI.

In some implementations, the DCI may schedule a PDSCH. The UE may transmit a HARQ-ACK information bit in response to receiving the PDSCH in a slot indicated by a field (e.g., PDSCH-to-HARQ_feedback timing indicator field) included in the DCI.

In some implementations, in a case that the UE transmits a NACK, in response to the scheduled PDSCH reception, to the NW, the UE may apply the information indicated by the indication#1.

In some implementations, regardless of whether the UE transmits an ACK or a NACK, in response to the scheduled PDSCH reception, to the NW, the UE may apply the information indicated by the indication#1.

In some implementations, the DCI may be DCI without a DL assignment. In other words, the DCI may not schedule the PDSCH reception(s). In some implementations, the NW may set one or more fields included in the DCI to a specific value. In some implementations, the NW may scramble the CRC of the DCI with a specific RNTI (e.g., C-RNTI, CS-RNTI, MCS-RNTI, or other RNTI). If the UE detects that the one or more fields included in the DCI are set to the specific value and/or if the UE finds that the CRC of the DCI is scrambled by the specific RNTI, the UE may recognize that the DCI does not schedule any PDSCH reception(s).

In some implementations, if the UE transmits HARQ information, in response to the DCI reception, to the NW, the UE may apply the information indicated by the indication#1. It should be noted that, the HARQ information may be an ACK-only, a NACK-only or ACK/NACK information. The ACK-only means that the UE only transmits the ACK. The NACK-only means that the UE only transmits the NACK. The ACK/NACK means that the UE may transmit either the ACK or the NACK.

In some implementations, regardless of whether the UE transmits an ACK or a NACK, in response to the DCI reception, to the NW, the UE may apply the information indicated by the indication#1.

In some implementations, the DCI may include a field to indicate which pre-configuration a UE should apply. The field may indicate a satellite ID or an indication of a neighboring NTN cell.

In some implementations, one of the one or more indication#1s may be a SIB or part of a SIB.

In some implementations, the SIB may be a SIB 19, SIB 1, SIB2, SIB3 or SIB4.

In some implementations, the UE may be requested by the NW to re-acquire the SIB.

In some implementations, if the indication#1 is present in the SIB, a UE in the RRC_IDLE state may perform an initial access and/or an initiate RRC connection procedure and/or an RA procedure using the information of the target satellite (e.g., second satellite SAT#2) indicated by the indication#1.

In some implementations, the UE may use the satellite assistance information indicated in the indication#1 to perform the DL synchronization and the UL transmission. Specifically, the UE may use the common TA parameters and the ephemeris of the target satellite (e.g., second satellite SAT#2) to determine the TA value when performing the UL transmissions during the RA procedure.

In some implementations, the UE may use the SSBs with the SSB indices indicated by the indication#1 to determine the transmission occasion(s) of the RA preambles (e.g., the PRACH occasion(s)) during the RA procedure.

In some implementations, the one or more indication#1s may include one or more of a measurement object ID, an indication of a neighboring NTN cell via the target satellite, SSB indices, frequency location(s), a bit indicating that the target satellite is present, a DL BWP ID, a UL BWP ID, a timestamp; a duration of the second timer (e.g., denoted as timer#2); and a parameter indicating how many times the UE may (re-)transmit the indication#3 to the NW.

In some implementations, the measurement object ID may indicate that the measurement object is configured in the pre-configuration.

In some implementations, the indication may indicate a neighboring NTN cell via the target satellite (e.g., second satellite SAT#2) from the list of neighboring NTN cells included in the SIB 19.

In a case that the GSCNs are the same, the one or more indication#1s may include the SSB indices transmitted from the target satellite (e.g., second satellite SAT#2).

In a case that the GSCNs are different, the one or more indication#1s may include the frequency location (e.g., ARFCN) of the SSBs transmitted from the target satellite (e.g., second satellite SAT#2).

In a case that the indication#1 include DCI, the indication#1 may include a bit indicating that the target satellite (e.g., second satellite SAT#2) is present. In some implementations, the DCI may include a 1-bit field to indicate that the target satellite (e.g., second satellite SAT#2) is present. The DCI may be with or without a DL assignment.

In some implementations, the DL BWP ID may indicate the first active DL BWP after a satellite switch or a successful reception of one or more indication#4s.

In some implementations, the UL BWP ID may indicate the first active UL BWP after a satellite switch or a successful reception of one or more indication#4s.

In some implementations, the timestamp may indicate when the UE switches from the source satellite (e.g., first satellite SAT#1) to the target satellite (e.g., second satellite SAT#2). For example, the timestamp may indicate the time at which the coverage area of the serving cell provided via the target satellite (e.g., the second satellite SAT#2) has started covering the coverage area of the serving cell provided via the source satellite (e.g., the first satellite SAT#1).

In some implementations, the timestamp may indicate a time in multiples of 10 ms after 00:00:00 on January 1, 1900 (Gregorian calendar). The exact time may be between the time indicated by the value of the timestamp minus 1 and the time indicated by the value of the timestamp.

In some implementations, the timestamp may indicate a time using a combination of a hyper SFN, an SFN, and/or a subframe number.

In some implementations, the duration of the second timer (e.g., timer#2) may indicate an initial value of the second timer or a length of the second timer.

In some implementations, the second timer may be maintained by an RRC entity or a MAC entity.

In some implementations, the second timer may be in the unit of slot(s), millisecond(s), or subframe(s).

In some implementations, the one or more indication#1s may include the parameter indicating how many times (e.g., once, twice, three times, etc.) the UE may (re-)transmit the indication#3 to the NW. The parameter may be an integer or an ENUMERATED type.

Referring back to FIG. 7, in action 705, the UE may perform UE actions#1 (e.g., upon a successful reception of the indication#1).

In some implementations, the UE actions#1 may include one or more of the following:

(1) in a case that the indication#1 includes measurement configuration ID(s) (e.g., *MeasID*(s)), activating the indicated measurement configuration(s);

(2) computing the TA value based on the common TA parameters and the ephemeris of the NTN serving cell provided via the target satellite (e.g., second satellite SAT#2);

(3) performing a UL frequency synchronization based on the satellite assistance information (e.g., *NTN-Config)* of the target satellite (e.g., second satellite SAT#2) (e.g., the satellite assistance information associated with the satellite ID or the neighboring NTN cell indicated by the pre-configuration or the indication#1);

(4) performing a DL sync based on the SSBs with SSB indices belonging to the target satellite (e.g., second satellite SAT#2) (e.g., the GSCN may be the same);

(5) performing time and frequency synchronization with the target satellite (e.g., second satellite SAT#2) according to the information about the SSBs of the target satellite (e.g., second satellite SAT#2) or the gNB#2 carried in the pre-configuration (e.g., at the time indicated by the timestamp carried in the pre-configuration); and/or

(6) in a case that the indication#1 transmitted via the SIB, and a bit, or one or more fields, in the indication#1 indicates that the target satellite (e.g., second satellite SAT#2) is present, performing an L1/L3 measurement on the SSBs transmitted by the target satellite (e.g., second satellite SAT#2) or belonging to the target satellite (e.g., second satellite SAT#2), where the SSB indices of the SSBs may be indicated in a SIB (e.g., SIB 19, SIB2, SIB3, SIB4), or may be provided/configured in the pre-configuration.

Referring back to FIG. 7, in action 706, the UE may transmit/send/report the measurement result(s)/report(s) of the serving cell provided via the target satellite (e.g., second satellite SAT#2) to the NW on the serving cell provided via the source satellite (e.g., first satellite SAT#1).

In some implementations, the UE may additionally be configured to perform an L1 or L3 measurement on the serving cell provided via the source satellite (e.g., first satellite SAT#1). The measured signal may include the SSBs received from the source satellite (e.g., first satellite SAT#1).

In some implementations, the measurement result(s)/report(s) may be the result(s) of an L1 measurement (e.g., the L1 measurement results/reports).

In some implementations, the L1 measurement result(s)/report(s) may be a type of UCI. For example, the L1 measurement result(s)/report(s) may include the CSI report(s).

In some implementations, the L1 measurement result/report may be transmitted on the PUCCH or the PUSCH, depending on whether the measurement result/report is a periodic, semi-persistent, or aperiodic CSI report.

In some implementations, the L1 measurement and/or the L1 measurement result/report may be triggered/activated by the indication#1 or upon a successful reception of the indication#1.

In some implementations, in a case that the L1 measurement/CSI report is configured as "semi-persistent", the L1/measurement/CSI report may be activated by the indication#1. In such a case, the UL grant (e.g., for the report on the PUSCH) or the PUCCH resource (for the report on the PUCCH) may be indicated by the indication#1.

In some implementations, the transmission of the L1 measurement results/reports may be triggered by one or more events.

In some implementations, the L1 measurement report may include a satellite ID and/or an SSB-RSRP and/or an SSBRI.

In some implementations, the measurement result(s)/report(s) may be the result(s) of N L3 measurement. The L3 measurement may be configured via the pre-configuration(s).

In some implementations, the report type of the L3 measurement may be configured as a periodical measurement report.

In some implementations, the report type of the L3 measurement may be configured as an event-triggered measurement report.

In some implementations, the event may be one of the following: Event A1, Event A2, Event A3, Event A4, Event A5, Event A6, Event D1, CondEvent A3, CondEvent A4, CondEvent A5, CondEvent D1, and/or CondEvent T1. Definitions of the aforementioned events are as follows.

Event A1: The RSRP/RSRQ/SINR of a serving cell becomes better than an absolute threshold.

Event A2: The RSRP/RSRQ/SINR of a serving cell becomes worse than an absolute threshold.

Event A3: The RSRP/RSRQ/SINR of a neighbor cell becomes amount of offset better than PCell/PSCell.

Event A4: The RSRP/RSRQ/SINR of a neighbor cell becomes better than an absolute threshold.

Event A5: The RSRP/RSRQ/SINR of the PCell/PSCell becomes worse than a first absolute threshold and the RSRP/RSRQ/SINR of a neighbor cell/SCell becomes better than a second absolute threshold.

Event A6: The RSRP/RSRQ/SINR of a neighbor cell becomes amount of offset better than the RSRP/RSRQ/SINR of an SCell.

Event D1: The distance between the UE and a reference location *referenceLocation1* becomes (e.g., in units of meters or kilometers) greater than a configured threshold *distanceThreshFromReference1* (e.g., also in units of meters or kilometers), and the distance between the UE and another reference location *referenceLocation2* becomes less than another configured threshold *distanceThreshFromReference2*.

CondEvent A3: The RSRP/RSRQ/SINR of a conditional reconfiguration candidate cell becomes amount of offset better than the RSRP/RSRQ/SINR the PCell/PSCell

CondEvent A4: The RSRP/RSRQ/SINR of a conditional reconfiguration candidate cell becomes better than an absolute threshold.

CondEvent A5: The RSRP/RSRQ/SINR of the PCell/PSCell becomes worse than a first absolute threshold and the RSRP/RSRQ/SINR of a conditional reconfiguration candidate cell becomes better than a second absolute threshold.

CondEvent D1: The distance between the UE and a reference location *referenceLocation1* of a conditional reconfiguration candidate becomes greater than a configured threshold *distanceThreshFromReference1*, and the distance between the UE and another reference location *referenceLocation2* of a conditional reconfiguration candidate becomes less than another configured threshold *distanceThreshFromReference2*.

CondEvent T1: A time measured at the UE becomes greater than a configured threshold *t1-Threshold* but is less than *t1-Threshold + duration,* where the *duration* may be configured by the NW.

In some implementations, the event may be an event different from the above events. In some implementations, the event may be "the RSRP/RSRQ/SINR of the target satellite becomes (amount of offset) better than the RSRP/RSRQ/SINR of the source satellite".

In some implementations, the event may be "the RSRP/RSRQ of the SSBs of the NTN serving cell provided via the target satellite (e.g., second satellite SAT#2) becomes larger than the RSRP/RSRQ of the SSBs of the NTN serving cell provided via the source satellite (e.g., first satellite SAT#1)".

In some implementations, the report of the L3 measurement may include the RSRP of the SSBs received from the target satellite (e.g., second satellite SAT#2), as indicated by the pre-configuration or the indication#1.

In some implementations, the report of the L3 measurement may include the RSRQ or the SINR.

In some implementations, the L3 measurement result/report may include the RSRP of SSB(s) and a satellite ID.

In some implementations, the L3 measurement result/report may include the RSRP of SSB(s) and an indication. When the indication is present and/or is configured as to have a first value, it may indicate that this L3 measurement result/report is associated with the target satellite, which is indicated in the pre-configuration or indication#1. When the indication is absent or is configured as to have a second value, it may indicate that this L3 measurement result/report is not associated with the target satellite, which is indicated in the pre-configuration or indication#1.

Referring back to FIG. 7, in action 707, the UE may determine whether certain conditions (e.g., denoted as Conditions#1) are met; and in action 708, the UE may transmit the indication#3 to the NW to inform the NW that the UE has determined to switch from the NTN serving cell provided via the source satellite (e.g., first satellite SAT#1) to the NTN serving cell provided via the target satellite (e.g., second satellite SAT#2) when the certain conditions are met.

In some implementations, the certain conditions (e.g., Conditions#1) may include one or more of the following:

(1) the current time is the same as the timestamp provided in the pre-configuration or indicated by the indication#1;
(2) the value of the first timer (e.g., timer#1) reaches the duration of the first timer indicated in the pre-configuration or by the indication#1;
(3) the event that triggers the L3 measurement report for the target satellite (e.g., second satellite SAT#2) happens;
(4) the event that triggers the L1 measurement report for the target satellite (e.g., second satellite SAT#2) happens; and
(5) the RSRP/RSRQ of the SSBs of the NTN serving cell provided via the target satellite (e.g., second satellite SAT#2) becomes larger than the RSRP/RSRQ of the SSBs of the NTN serving cell provided via the source satellite (e.g., first satellite SAT#1).

In some implementations, the UE may (as configured in the pre-configuration or indicated by the indication#1) transmit the indication#3 to the NW through the NTN serving cell provided via the source satellite (e.g., first satellite SAT#1).

In some implementations, the UE may (as configured in the pre-configuration or indicated by the indication#1) transmit the indication#3 to the NW through the NTN serving cell provided via the target satellite (e.g., second satellite SAT#2).

In some implementations, the indication#3 may be a MAC CE. In some implementations, the UE may transmit the indication#3 using pre-allocated PUSCH resources.

In some implementations, the pre-allocated PUSCH resources may be scheduled by a Type-1 configured UL grant or a Type-2 configured UL grant.

In some implementations, the indication#3 may be UCI. In some implementations, the UE may transmit the indication#3 using a PUCCH resource configured by the NW, where the PUCCH resource is specifically configured for the indication#3.

In some implementations, the indication#3 (e.g., the UCI) may be a new type of UCI, which is distinct from the HARQ-ACK information bits, the scheduling request (SR) information bits, the CSI bits, the link radio (LRR) information, and the unused configured grant (CG) PUSCH transmission occasions indication bits.

In some implementations, the UE may not multiplex other (types of) UCI with the indication#3 in the same PUCCH resource.

In some implementations, the UE may not expect to be configured by the NW to multiplex the indication#3 with other (types of) UCI in the same PUCCH resource.

In some implementations, in a case that the dedicated PUCCH resource overlaps with a PUSCH scheduled by DCI, or with a PUSCH scheduled by a Type-1 configured UL grant or a Type-2 configured UL grant, the UE may not expect that more than two UCI bits are transmitted in the PUCCH and/or the UE may multiplex the UCI bits that would be transmitted in the PUCCH in the PUSCH.

Referring back to FIG. 7, in action 709, the UE may start or restart a second timer (e.g., timer#2).

In some implementations, the UE may start or restart the second timer (e.g., timer#2) with an initial value provided in the pre-configuration or indicated in the one or more indication#1s, and decrease the second timer as time goes by.

In some implementations, the UE may start or restart the second timer (e.g., timer#2) with a value of 0 and increase the second timer as time goes by.

In some implementations, the UE's RRC entity may start the second timer.

In some implementations, the UE's MAC entity may start the second timer.

In some implementations, when there is only one MAC entity within the UE, the only MAC entity may start the second timer.

In some implementations, when there are two MAC entities within the UE, one of the two MAC entities, that is associated with the MCG, may start the second timer.

In some implementations, the UE may set a counter (e.g., denoted as counter#1) to 0 (e.g., reset the counter#1). The counter#1 may be used to count how many times the indication#3 has been (re-)transmitted.

Referring back to FIG. 7, in action 710, the UE may receive an indication#4 from the NW while the second timer (e.g., timer#2) is running, to determine whether the UE is allowed to perform UE actions#2 or not. For example, the indication#4 may be used to determine whether the UE is allowed to switch from the NTN serving cell provided via the source satellite (e.g., first satellite SAT#1) to the NTN serving cell provided via the target satellite (e.g., second satellite SAT#2) (e.g., as requested via indication#3), or the UE may retransmit the indication#3.

In some implementations, the indication#4 may be a MAC CE.

In some implementations, the indication#4 may be DCI. In some implementations, the DCI may be DCI format 1_0, DCI format 1_1, DCI format 0_0, DCI format 0_1 or other DCI format.

In some implementations, the UE may receive the indication#4 from the NW via the source satellite (e.g., first satellite SAT#1) or via the target satellite (e.g., second satellite SAT#2).

In some implementations, the UE may receive the indication#4 from the NW via the satellite to which the UE transmitted the indication#3.

In some implementations, the indication#4 may include one or more of an indication field, a beam indication, information about the UL power control, a DL BWP ID, a UL BWP ID, an indication of whether the UE may perform an RA procedure, and indication of an N_TA value, and a preamble index.

In some implementations, the indication field included in the indication#4 may indicate the acknowledgement from the NW in response to the indication#3.

In some implementations, the indication field may be 1-bit, which may be set to "1" or "0". In some implementations, a first value of the bit (e.g., "1") may mean that the NW allows the UE to perform the UE actions#2 (e.g., serving satellite switching). In some implementations, a second value of the bit (e.g., "0") may mean that the NW does not allow the UE to perform the UE actions#2 (e.g., serving satellite switching).

In some implementations, the beam indication included in the indication#4 may be a beam indication of specific channel(s) and/or a specific reference signal(s) (e.g., TCI state(s)).

In some implementations, the information about the UL power control for PUSCH and/or PUCCH and/or SRS may include one or more of the following:

(1) One or more p0-alpha set(s) (ID);

(2) PL-RS ID, e.g., *pathlossReferenceIndex*, which may indicate a reference signal that may be used by the UE to estimate the path-loss and to calculate the power for UL transmission(s);

(3) Nominal PUSCH power configuration(s), e.g., *preambleReceivedTargetPower, p0-NominalWithoutGrant*, *p0-NominalWithGrant, p0-PUCCH-Value*, which may be used by the UE to calculate the power of UL transmission(s).

(4) An index of a PUSCH power control adjustment state, which may be used by the UE to perform closed-loop power control and calculate the power of UL transmission(s).

In some implementations, the DL BWP ID may indicate the first active DL BWP after a satellite switch or a successful reception of one or more indication#2s.

In some implementations, the UL BWP ID may indicate the first active UL BWP after a satellite switch or after a successful reception of one or more indication#2s.

In some implementations, the indication#4 may include the indication of whether the UE may perform an RA procedure upon the reception of the indication#2 (e.g., a switching command), the ENUMERATED set to {enabled}, or the ENUMERATED set to {enabled, disabled}.

In some implementations, the indication#4 may include the indication of N_TA value that the UE may use to determine the transmission time of the preamble(s), which is part of the RA procedure upon the reception of the indication#2.

In some implementations, the indication of N_TA value may instruct the UE to use the N_TA value equal to 0 or to use the N_TA value equal to the current stored N_TA value.

In some implementations, in a case that the UE receives the indication#4 from the NW, the UE may stop the second timer (e.g., timer#2).

In some implementations, in a case that the UE has received the indication#4 (e.g., before expiry of the second timer), and the indication field included in the indication#4 indicates the first value (e.g., "1"), the UE may perform the UE actions#2.

In some implementations, when the second timer expires, if the UE has not received the indication#4 from the NW, or if the UE has received the indication#4 and the indication field included in the indication#4 indicates the second value (e.g., "0"), the UE may not perform the UE actions#2 (e.g., as illustrated in action 713 of FIG. 7), and/or the UE may retransmit the indication#3 immediately or at the next transmission occasion of the indication#3. In addition, the UE may increment the counter#1 by 1.

In some implementations, when the second timer expires, if the UE has not received the indication#4 from the NW, or if the UE has received the indication#4 and the indication field included in the indication#4 indicates the second value (e.g., "0"): the UE may not perform the UE actions#2 (e.g., as illustrated in action 713 of FIG. 7); and/or if the duration of the prohibit timer is provided by the pre-configuration or the duration of the prohibit timer is not 0, the UE may start or restart a prohibit timer for retransmission of the indication#3 with an initial value set to the duration provided by the pre-configuration.

In some implementations, when the prohibit timer is running, the UE may not (re-)transmit the indication#3 to the NW.

In some implementations, when the prohibit timer expires, the UE may (re-)transmit the indication#3 to the NW (e.g., at the next transmission occasion of the indication#3). In addition, the UE may increment the counter#1 by 1.

In some implementations, the number of times the UE may (re-)transmit the indication#3 to the NW (e.g., the maximum number of (re-)transmissions for the indication#3) may be configured by the NW in the pre-configuration or in the indication#1.

In some implementations, in a case that the counter#1 equals the parameter indicating the maximum number of (re-)transmissions for the indication#3 (e.g., as provided in the pre-configuration or indicated by the indication#1), the UE may not retransmit the indication#3.

In some implementations, the UE actions#2 may include one or more of the following:

(1) applying the beam indication (e.g., TCI state(s)), indicated/provided by the indication#1 or the pre-configuration, for subsequent UL transmissions and/or DL receptions;

(2) applying the UL power control information, indicated/provided by the indication#1 or the pre-configuration, for subsequent UL transmissions;

(3) switching the active DL BWP to the DL BWP ID indicated by the indication#1/pre-configuration/indication#4;

(4) switching the active UL BWP to the UL BWP ID indicated by the indication#1/pre-configuration/indication#4;

(5) re-acquiring system information (e.g., SIB1 and/or other SIBs such as SIB2, SIB3, SIB4, SIB19, etc.), regardless of whether the corresponding *value Tag* has changed;

(6) performing a RACH-based action: in a case that the indication#1, the indication#2, and/or the pre-configuration indicates to the UE to perform a (e.g., 2-step/4-step) RA procedure, performing the RA procedure and transmitting a preamble with N_TA equal to 0, a common TA equal to a value calculated from the common TA parameters of the NTN serving cell of the target satellite (e.g., second satellite SAT#2), and a UE-specific TA equal to a value calculated from the ephemeris of the NTN serving cell of the target satellite (e.g., second satellite SAT#2), respectively; and/or (7) in a case that the indication#1 or the pre-configuration indicates to the UE to perform an RA procedure, performing the RA procedure and transmitting a preamble with N_TA equal to a value indicated by the indication#1 or the pre-configuration.

In some implementations, when the pre-configuration/indication#4 provides a preamble index, the UE may use the provided/indicated preamble index for the preamble transmission.

In some implementations, the time-domain and/or frequency-domain resource for the PRACH transmission may be provided by the pre-configuration.

Referring back to FIG. 7, in action 711, in a case that the UE performs the UE actions#2, the UE may start being served by the NTN serving cell provided via the target satellite (e.g., second satellite SAT#2); and in action 712, the NTN serving cell may stop serving the current coverage area via the source satellite (e.g., first satellite SAT#1) and may switch to the next coverage area.

In some implementations, the satellite switching procedure(s) described according to FIG. 5, FIG. 6, and/or FIG. 7 may be supported in a communication system (e.g., an NR system). When the communication system supports more than one satellite switching procedures, the NW may indicate which satellite switching procedure (e.g., the satellite switching procedure described according to FIG. 5, 6, or 7) is used in the current NW operation. In some implementations, the NW may configure a parameter, indicating the satellite switching procedure to be used by the UE, via system information (e.g., SIB), dedicated signaling (e.g., RRC message), a MAC CE, or DCI.

In some implementations, in the satellite switching procedure(s) described according to FIG. 5, FIG. 6, and/or FIG. 7, the UE actions#1 are performed prior to the UE actions#2.

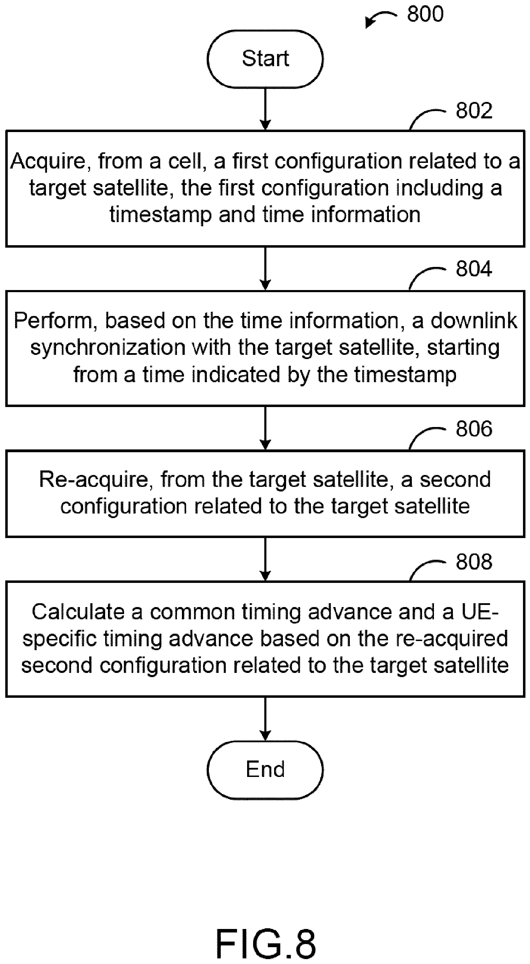

FIG. 8 is a flowchart illustrating a method/process 800 for satellite switching, according to an example implementation of the present disclosure. In some embodiment the process 800 may be performed by a UE. It should be noted that although actions 802, 804, 806, and 808 are illustrated as separate actions represented as independent blocks in FIG. 8, these separately illustrated actions should not be construed as necessarily order-dependent. Unless otherwise indicated, the order in which the actions are performed in FIG. 8 is not intended to be construed as a limitation, and any number of the disclosed blocks may be combined in any order to implement the method, or an alternate method. Moreover, each of actions 802, 804, 806, and 808 may be performed independently of other actions and may be omitted in some implementations of the present disclosure.

In some implementations, the UE may perform a satellite switching from a source satellite to a target satellite in the process 800. The source satellite and the target satellite may be, for example, associated with or belonging to a same cell (e.g., the serving cell).

Referring to FIG. 8, in action 802, the process 800 may start by acquiring, from a cell, a first configuration related to a target satellite, the first configuration including a timestamp and time information. Specifically, the UE may be served by the cell provided via the source satellite, or by the source satellite, in action 802.

In some implementations, the UE may acquire the first configuration related to the target satellite from the cell provided via the source satellite. In other words, the UE may acquire the first configuration related to the target satellite from the source satellite.

In some implementations, the UE may acquire the first configuration related to the target satellite from the cell provided via the target satellite. In other words, the UE may acquire the first configuration related to the target satellite from the target satellite.

In some implementations, acquiring the first configuration related to the target satellite may include receiving system information (SI) broadcast by the cell, where the SI may include the first configuration related to the target satellite. The SI may include at least one of the SIB 1 and SIB19.

In some implementations, the acquired first configuration may be carried in an RRC message. In such a case, the first configuration may, for example, include one or more RRC parameters or IEs.

In some implementations, the first configuration related to the target satellite may further include common timing advance (TA) parameter(s) of the target satellite, and the ephemeris of the target satellite, but details of the first configuration is not limited in the present disclosure.

Referring back to FIG. 8, in action 804, the process 800 may perform, based on the time information, a DL synchronization with the target satellite, starting from a time indicated by the timestamp.

In some implementations, the timestamp included in the first configuration may indicate a time in unis of 10 milliseconds after 00:00:00 on January 1, 1900 (e.g., Gregorian calendar).

In some implementations, the time information may be used to determine the timing of SSB transmissions from the target satellite.

In some implementations, the time information included in the first configuration may include the time domain information described above, with reference to FIGS. 5 to 7. For example, the time information may be about or associated with the SSBs transmitted from the target satellite. For example, the time information may be in units of subframes.

In some implementations, when performing the DL synchronization with the target satellite, the UE may receive SSB(s) of the target satellite based on the time information.

In some implementations, at the time indicated by the timestamp, the UE may start or restart a timer based on timer information. The timer information may be, for example, included in the first configuration related to the target satellite and received in action 802. The timer information may include, for example, a duration of a time of the timer.

In some implementations, the timer started at the time indicated by the timestamp may include the first timer (e.g., denoted as timer#1), as described above with reference to FIGS. 6 and 7. In some implementations, the timer may be started by the UE's RRC entity. In other words, the timer may be an RRC timer.

In some implementations, upon an expiry of the timer, the UE may perform certain action(s) (e.g., UE actions#2, as described above with reference to FIGS. 5 to 7), and start being served by the target satellite. In other words, the timer may be configured to control a validity of uplink synchronization during a connection with the source satellite.

Referring back to FIG. 8, in action 806, the process 800 may re-acquire, from the target satellite, a second configuration related to the target satellite.

In some implementations, the UE may re-acquire the second configuration related to the target satellite from the target satellite after performing the DL synchronization with the target satellite.

In some implementations, the UE may re-acquire the second configuration related to the target satellite from the cell provided via the target satellite.

In some implementations, re-acquiring the second configuration related to the target satellite may include receiving SI broadcast by the cell, where the SI may include the second configuration related to the target satellite. The SI may include at least one of the SIB 1 and SIB 19.

In some implementations, the re-acquired second configuration may be carried in an RRC message. In such a case, the second configuration may, for example, include one or more RRC parameters or IEs.

In some implementations, the re-acquired second configuration related to the target satellite may further include common TA parameter(s) of the target satellite, and the ephemeris of the target satellite, but details of the re-acquired second configuration is not limited in the present disclosure.

Referring back to FIG. 8, in action 808, the process 800 may calculating a common TA and a UE-specific TA based on the re-acquired second configuration related to the target satellite. The process 800 may then end.

In some implementations, the UE may calculate the common TA and the UE-specific TA based on the common TA parameter(s) and the ephemeris, of the target satellite, included in the re-acquired second configuration.

Accordingly, the UE may be served by the target satellite instead of the source satellite, or by the cell provided via the target satellite instead of the source satellite, even if the source satellite stops serving the current coverage area of the UE.

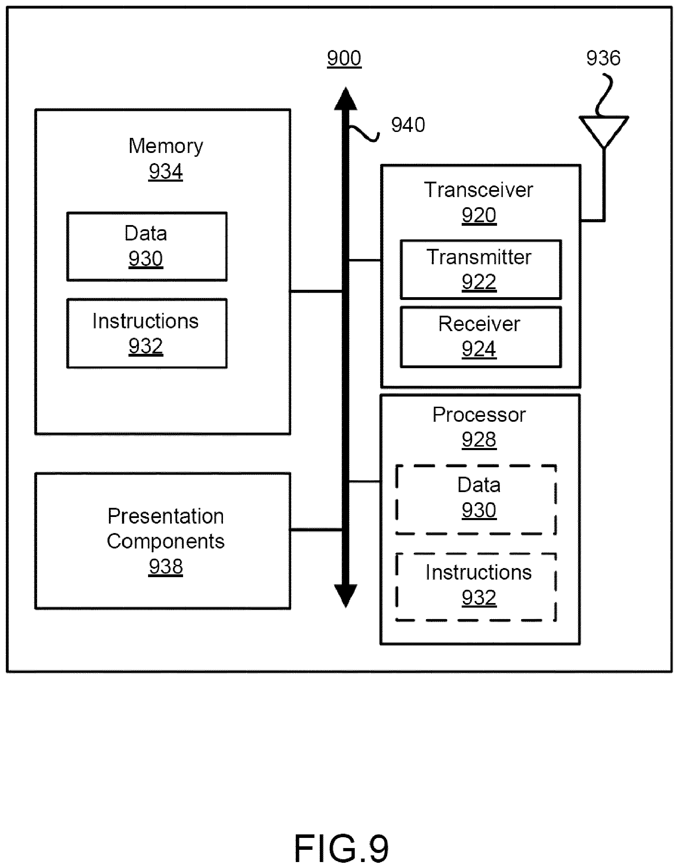

FIG. 9 is a block diagram illustrating a node 900 for wireless communication, according to an example implementation of the present disclosure. As illustrated in FIG. 9, a node 900 may include a transceiver 920, a processor 928, a memory 934, one or more presentation components 938, and at least one antenna 936. The node 900 may also include a radio frequency (RF) spectrum band module, a BS communications module, a NW communications module, and a system communications management module, Input / Output (I/O) ports, I/O components, and a power supply (not illustrated in FIG. 9).

Each of the components may directly or indirectly communicate with each other over one or more buses 940. The node 900 may be a UE or a BS that performs various functions disclosed with reference to FIGS. 1 to 8.

The transceiver 920 has a transmitter 922 (e.g., transmitting/transmission circuitry) and a receiver 924 (e.g., receiving/reception circuitry) and may be configured to transmit and/or receive time and/or frequency resource partitioning information. The transceiver 920 may be configured to transmit in different types of subframes and slots including, but not limited to, usable, non-usable and flexibly usable subframes and slot formats. The transceiver 920 may be configured to receive data and control channels.

The node 900 may include a variety of computer-readable media. Computer-readable media may be any available media that may be accessed by the node 900 and include volatile (and/or non-volatile) media and removable (and/or non-removable) media.

The computer-readable media may include computer-storage media and communication media. Computer-storage media may include both volatile (and/or non-volatile media), and removable (and/or non-removable) media implemented in any method or technology for storage of information, such as computer-readable instructions, data structures, program modules or data.

Computer-storage media may include RAM, ROM, EPROM, EEPROM, flash memory (or other memory technology), CD-ROM, Digital Versatile Disks (DVD) (or other optical disk storage), magnetic cassettes, magnetic tape, magnetic disk storage (or other magnetic storage devices), etc. Computer-storage media may not include a propagated data signal. Communication media may typically embody computer-readable instructions, data structures, program modules, or other data in a modulated data signal, such as a carrier wave, or other transport mechanisms and include any information delivery media.

The term "modulated data signal" may mean a signal that has one or more of its characteristics set or changed in such a manner as to encode information in the signal. Communication media may include wired media, such as a wired NW or direct-wired connection, and wireless media, such as acoustic, RF, infrared, and other wireless media. Combinations of any of the previously listed components should also be included within the scope of computer-readable media.

The memory 934 may include computer-storage media in the form of volatile and/or non-volatile memory. The memory 934 may be removable, non-removable, or a combination thereof. Example memory may include solid-state memory, hard drives, optical-disc drives, etc. As illustrated in FIG. 9, the memory 934 may store a computer-readable and/or computer-executable instructions 932 (e.g., software codes or programs) that are configured to, when executed, cause the processor 928 to perform various functions disclosed herein, for example, with reference to FIGS. 1 to 8. Alternatively, the instructions 932 may not be directly executable by the processor 928 but may be configured to cause the node 900 (e.g., when compiled and executed) to perform various functions disclosed herein.

The processor 928 (e.g., having processing circuitry) may include an intelligent hardware device, e.g., a Central Processing Unit (CPU), a microcontroller, an ASIC, etc. The processor 928 may include memory. The processor 928 may process the data 930 and the instructions 932 received from the memory 934, and information transmitted and received via the transceiver 920, the baseband communications module, and/or the NW communications module. The processor 928 may also process information to send to the transceiver 920 for transmission via the antenna 936 to the NW communications module for transmission to a Core Network (CN).

One or more presentation components 938 may present data indications to a person or another device. Examples of presentation components 938 may include a display device, a speaker, a printing component, a vibrating component, etc.

In view of the present disclosure, various techniques may be used for implementing the disclosed concepts without departing from the scope of those concepts. Moreover, while the concepts have been disclosed with specific reference to certain implementations, a person of ordinary skill in the art may recognize that changes may be made in form and detail without departing from the scope of those concepts. As such, the disclosed implementations are considered in all respects as illustrative and not restrictive. It should also be understood that the present disclosure is not limited to the specific implementations disclosed. Still, many rearrangements, modifications, and substitutions are possible without departing from the scope of the present disclosure.

**Claims**

1. A method for satellite switching performed by a user equipment, UE, the method comprising:

   acquiring, from a cell, a first configuration related to a first satellite, the first configuration comprising a timestamp and time information;
   performing, based on the time information, a downlink, DL, synchronization with the first satellite, starting from a time indicated by the timestamp;
   re-acquiring, from the first satellite, a second configuration related to the first satellite; and
   calculating a common timing advance and a UE-specific timing advance based on the re-acquired second configuration related to the first satellite.

2. The method of claim 1, wherein the first configuration related to the first satellite further comprises timer information, and the method further comprises:
   at the time indicated by the timestamp, starting a timer based on the timer information.

3. The method of claim 2, wherein the timer comprises a radio resource control, RRC, timer.

4. The method of claim 2 or 3, wherein:

   acquiring, from the cell, the first configuration related to the first satellite comprises acquiring, from a second satellite, the first configuration related to the first satellite, and
   the timer is configured to control a validity of uplink synchronization during a connection with the second satellite.

5. The method of any one of the preceding claims, wherein acquiring, from the cell, the first configuration related to the first satellite comprises:
   acquiring, from a second satellite, the first configuration related to the first satellite, wherein both the first satellite and the second satellite are associated with the cell.

6. The method of any one of the preceding claims, wherein:

acquiring, from the cell, the first configuration related to the first satellite comprises receiving system information broadcast by the cell, and
the system information comprises the first configuration related to the first satellite.

7. The method of claim 6, wherein the system information comprises at least one of a system information block type 1, SIB1, and a system information block type 19, SIB19.

8. The method of any one of the preceding claims, wherein performing the DL synchronization with the first satellite comprises:
receiving a synchronization signal block, SSB, of the first satellite based on the time information.

9. The method of claim 8, wherein the time information is associated with the SSB and is in units of subframes.

10. The method of any one of the preceding claims, wherein re-acquiring, from the first satellite, the second configuration related to the first satellite comprises:
re-acquiring, from the first satellite, the second configuration related to the first satellite after performing the DL synchronization with the first satellite.

11. A user equipment, UE (900), comprising:

one or more non-transitory computer-readable media (934) storing one or more computer-executable instructions (932); and
at least one processor (928) coupled to the one or more non-transitory computer-readable media, the at least one processor configured to execute the one or more computer-executable instructions to cause the UE to perform the method of any of claims 1 to 10.

FIG.1

FIG.2

EP 4 513 784 A1

SAT#1　　　SAT#2　　　　　SAT#2　　　SAT#1　　　SAT#2

UE　　　NTN GW*　　　　UE　　　NTN GW*　　　　UE　　　NTN GW*

Coverage overlapping

t1　　　　　　　t2　　　　　　　t3　　　　time

40

FIG.3

FIG.4

EP 4 513 784 A1

FIG.5

FIG.6

FIG.7

800

Start

802

Acquire, from a cell, a first configuration related to a target satellite, the first configuration including a timestamp and time information

804

Perform, based on the time information, a downlink synchronization with the target satellite, starting from a time indicated by the timestamp

806

Re-acquire, from the target satellite, a second configuration related to the target satellite

808

Calculate a common timing advance and a UE-specific timing advance based on the re-acquired second configuration related to the target satellite

End

# FIG.8

FIG.9

**Europäisches Patentamt**
**European Patent Office**
**Office européen des brevets**

# EUROPEAN SEARCH REPORT

Application Number

EP 24 19 2558

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | XIANGDONG ZHANG ET AL: "Discussion on unchanged PCI scenario", 3GPP DRAFT; R2-2304899; TYPE DISCUSSION; NR_NTN_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Incheon, KR; 20230522 - 20230526 12 May 2023 (2023-05-12), XP052314127, Retrieved from the Internet: URL:https://www.3gpp.org/ftp/TSG_RAN/WG2_RL2/TSGR2_122/Docs/R2-2304899.zip R2-2304899 Discussion on unchanged PCI scenario.docx [retrieved on 2023-05-12] * page 2, paragraph 3 - page 4, paragraph 4 * | 1-11 | INV. H04B7/185 H04W36/00 |
| Y | WO 2023/098568 A1 (HUAWEI TECH CO LTD [CN]) 8 June 2023 (2023-06-08) * abstract * & US 2024/323780 A1 (HU XINGXING [CN] ET AL) 26 September 2024 (2024-09-26) * paragraphs [0116], [0117], [0153] - [0157], [0223] - [0233], [0268] * | 1-11 | TECHNICAL FIELDS SEARCHED (IPC) H04B H04W |

-/--

The present search report has been drawn up for all claims

| Place of search | Date of completion of the search | Examiner |
|---|---|---|
| The Hague | 12 December 2024 | Blanco Cardona, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 513 784 A1**

Europäisches
Patentamt

European
Patent Office

Office européen
des brevets

# EUROPEAN SEARCH REPORT

Application Number

EP 24 19 2558

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HAN CHA ET AL: "Discussion on HO enhancements for NTN", 3GPP DRAFT; R2-2211769; TYPE DISCUSSION; NR_NTN_ENH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Toulouse, FR; 20221114 - 20221118 4 November 2022 (2022-11-04), XP052215873, Retrieved from the Internet: URL:https://www.3gpp.org/ftp/TSG_RAN/WG2_R L2/TSGR2_120/Docs/R2-2211769.zip R2-2211769_Discussion on handover enhancements for NTN.docx [retrieved on 2022-11-04] * page 1 * | 1-11 | |
| | ----- | | |
| Y | ASUSTEK: "Discussion on configuration of satellite information for handover", 3GPP DRAFT; R2-2209850, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. electronic; 20221010 - 20221019 30 September 2022 (2022-09-30), XP052263175, Retrieved from the Internet: URL:https://ftp.3gpp.org/tsg_ran/WG2_RL2/T SGR2_119bis-e/Docs/R2-2209850.zip R2-2209850 Discussion on configuration of satellite information for handover.docx [retrieved on 2022-09-30] * the whole document * | 4 | TECHNICAL FIELDS SEARCHED (IPC) |
| | ----- | | |

The present search report has been drawn up for all claims

| Place of search | Date of completion of the search | Examiner |
|---|---|---|
| The Hague | 12 December 2024 | Blanco Cardona, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

48

## ANNEX TO THE EUROPEAN SEARCH REPORT
## ON EUROPEAN PATENT APPLICATION NO.

EP 24 19 2558

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2024

| Patent document cited in search report | Publication date | Patent family member(s) | | Publication date |
|---|---|---|---|---|
| WO 2023098568 A1 | 08-06-2023 | CN | 116209019 A | 02-06-2023 |
| | | EP | 4426009 A1 | 04-09-2024 |
| | | JP | 2024543190 A | 19-11-2024 |
| | | US | 2024323780 A1 | 26-09-2024 |
| | | WO | 2023098568 A1 | 08-06-2023 |

EPO FORM P0459

For more details about this annex : see Official Journal of the European Patent Office, No. 12/82